# EUROPEAN PATENT SPECIFICATION

(11) **EP 1 010 307 B1**
(45) Date of publication and mention of the grant of the patent: **26.02.2003**
(21) Application number: 98941177.2
(22) Date of filing: 28.08.1998
(51) Int. Cl.: H04L 27/00, H04B 1/66

(54) **DIGITAL TRANSMISSION USING SUBBAND CODING**
DIGITALE ÜBERTRAGUNG MIT TEILBANDKODIERUNG
TRANSMISSION NUMERIQUE A CODAGE PAR SOUS-BANDES

(30) Priority: 29.08.1997 CA 2214287; 05.05.1998 CA 2236649
(43) Date of publication of application: 21.06.2000
(73) Proprietor: Bell Canada, Montreal Quebec H3C 3G4 (CA)
(72) Inventor: YEAP, Tet, Hin, Ottawa, Ontario K2A 2A8 (CA)
(74) Representative: Ablett, Graham Keith
(86) International application number: CA9800816
(87) International publication number: WO99012317

(56) References cited:
- WO-A-98/09383
- SANDBERG, TZANNES: "Overlapped discrete multitone modulation for high speed copper wire communications" IEEE JOURNAL ON SELECTED AREAS IN COMMUNICATIONS, vol. 13, no. 9, December 1995, pages 1571-1585, XP000543156 New York, US cited in the application
- GANDHI ET AL.: "Wavelets for baseband coding of waveforms" GLOBAL TELECOMMUNICATIONS CONFERENCE, 28 November 1994 - 2 December 1994, pages 363-367, XP000488574 New York, US
- GROSS ET AL.: "Discrete wavelet multitone (DWMT) system for digital transmission over HFC linkes" PROCEEDINGS OF THE SPIE, vol. 2609, 23 October 1995, pages 168-175, XP000576748 Bellingham, US
- YANG ET AL.: "A multirate wireless transmission system using wavelet packet modulation" IEEE VEHICULAR TECHNOLOGY CONFERENCE, 4 - 7 May 1997, pages 368-372, XP000701822 New York, US
- AKANSU ET AL.: "Wavelet and subband transforms: fundamentals and communication applications" IEEE COMMUNICATIONS MAGAZINE, vol. 35, no. 12, December 1997, pages 104-115, XP000770959 New York, US cited in the application

## Description

### TECHNICAL FIELD:

(1) The invention relates to a method and apparatus for encoding digital signals for transmission and/or storage. The invention is especially, but not exclusively, applicable to the encoding of digital signals for transmission via communications channels, such as twisted wire pair subscriber loops in telecommunications systems, or to storage of signals in or on a storage medium, such as video signal recordings, audio recordings, data storage in computer systems, and so on.

### BACKGROUND ART:

Using quadrature amplitude modulation (QAM), it is possible to meet the requirements for Asymmetric Digital Subscriber Loops (ADSL), involving rates as high as 1.5 megabits per second for loops up to 3 kilometres long with specified error rates or, 8 megabits per second over 1 kilometre loops. However, these rates are considered to be too low for proposed Very High Speed Digital Subscriber Loops (VDSL) which will require bit rates of, perhaps, 20 Mbits/second or higher. These rates cannot readily be achieved with conventional QAM systems in which there is a tendency, when transmitting at high bit rates, to lose a portion of the signal, particularly the higher frequency part, causing the signal quality to suffer significantly. This is particularly acute in two-wire subscriber loops, such as so-called twisted wire pairs.

It has been proposed, therefore, to use frequency division modulation (FDM) to divide the transmission system into a set of frequency-indexed sub-channels. The input data is partitioned into temporal blocks, each of which is independently modulated and transmitted in a respective one of the sub-channels. One such system, known as discrete multi-tone transmission (DMT), is disclosed in United States patent specification No. 5,479,447 issued December 1995 and in an article entitled "Performance Evaluation of a Fast Computation Algorithm for the DMT in High-Speed Subscriber Loop", IEEE Journal on Selected Areas in Communications, Vol. 13, No. 9, December 1995 by I. Lee *et al.*

Such DMT systems are not entirely satisfactory because noise and other sources of degradation could result in one or more sub-channels being lost. If only one sub-channel fails, the total signal is corrupted and either lost or, if error detection is employed, must be retransmitted. It has been proposed to remedy this problem by adaptively eliminating sub-channels, but to do so would involve very complex circuitry.

In United States patent specification No. 5,497,398 issued March 1996, M.A. Tzannes and M.C. Tzannes proposed ameliorating the problem of degradation due to sub-channel loss, and obtaining superior burst noise immunity, by replacing the Fast Fourier Transform with a lapped transform, thereby increasing the difference between the main lobe and side lobes of the filter response in each sub-channel. The lapped transform may comprise wavelets, as disclosed by M.A. Tzannes, M.C. Tzannes and H.L. Resnikoff in an article "The DWMT: A Multicarrier Transceiver for ADSL using *M*-band Wavelets", ANSI Standard Committee T1E1.4 Contribution 93-067, Mar. 1993 and by S.D. Sandberg, M.A. Tzannes in an article "Overlapped Discrete Multitone Modulation for High Speed Copper Wire Communications", IEEE Journal on Selected Areas in Comm., Vol. 13, No. 9, pp. 1571-1585, Dec. 1995, such systems being referred to as "Discrete Wavelet Multitone (DWMT).

A disadvantage of both DMT and DWMT systems is that they typically use a large number of sub-channels, for example 256 or 512, which leads to complex, costly equipment and equalization and synchronization difficulties. These difficulties are exacerbated if, to take advantage of the better characteristics of the two-wire subscriber loop at lower frequencies, the number of bits transmitted at the lower frequencies is increased and the number of bits transmitted at the higher frequencies reduced correspondingly.

The invention is particularly concerned with the use of an analysis filter bank to decompose the signal to be transmitted/stored into a plurality of subband signals. The term "subband signals" sometimes is used to refer to a plurality of narrowband signals within a prescribed band of interest, perhaps obtained by a corresponding plurality of bandpass filters. The present invention, however, is concerned with subband signals produced by an analysis filter bank, as disclosed in an article entitled "Perfect-channel Splitting By Use of Interpolation and Decimation Tree Decomposition Techniques", Proc. Intl. Conf. Inform. Sci. Syst., pp. 443-446, Aug. 1976, by A. Crosier, D. Esteban and C. Galand. Crosier *et al.* disclosed an analysis filter bank in the form of a quadrature mirror filter (QMF) bank. For a more recent discussion of subband transforms, which include certain wavelet transforms, the reader is directed to an article entitled "Wavelet and Subband Transforms: Fundamentals and Communication Applications", Ali N. Akansu *et al*., IEEE Communications Magazine, Vol. 35, No. 12, December 1997.

As explained by Akansu *et al*., in discrete-time signal processing, the sampling rate can be reduced by splitting the frequency band using Finite Impulse Response (FIR) filters. Each time one splits the band into a number of parts, for example halves, the sampling rate is reduced by the same number. Hence, repeatedly splitting the frequency band can enable the signal to be processed at a much lower sampling rate. Unfortunately, overlap between the different bands causes aliasing problems. As discussed by Crosier *et al*., to split the frequency band exactly so as to allow "perfect reconstruction" of the original signal would require using so-called "brick" filters, i.e. FIR filters of infinite duration, which neither overlapped nor left gaps. In practice, this is not possible, so Crosier *et al.* proposed limiting the time duration using weighting functions which allow the subbands to overlap yet provide perfect reconstruction, at least theoretically. Difficulties arise in choosing a weighting function such that the reconstructed signal is distortion free or a so-called "perfect reconstruction". However, providing the analysis filter bank and synthesis filter bank satisfy certain conditions, as set out in the article by Akansu *et al*., "perfect reconstruction" can be achieved.

In a practical implementation, such as in a telecommunications system, some distortion may be acceptable, so it may be possible to use an analysis filter bank which does not quite meet the conditions set out in Akansu *et al*.'s article, and provides only so-called "pseudo perfect reconstruction".

In the context of the present invention, and hereafter in this specification, the term "analysis filter bank" refers to a filter bank meeting the afore-mentioned conditions for "perfect reconstruction", or the conditions for "pseudo-prefect reconstruction", and the term "subband signals" refers to signals produced by such an analysis filter bank.

In the analysis filter bank, the original signal is divided into a plurality of narrowband signals, each having a bandwidth considerably narrower than the bandwidth of either the original signal or the transmission channel through which the signal is to be transmitted. However, each of these narrowband signals must be downsampled to create a subband signal. The downsampling produces a subband signal which has a frequency spectrum having a bandwidth much greater than not only the original narrowband signal but also the transmission medium.

Practical applications of such subband signals have been disclosed, for example, in US Patent No. 5,214,678, in which J.D. Rault disclosed a system which uses an analysis filter bank to divide a digital audio signal into a plurality of subbands, and in U.S. Patent No. 5,161,210 in which Druydesteyn disclosed a system in which an analysis filter bank splits an audio signal into subband signals and an auxiliary tone is injected into each of the subband signals which then are recombined using a synthesis filter.

It was generally accepted, therefore, that the subband signals could not be combined (without reconstruction) before transmission/storage.

In International patent application number WO 9809383, the present inventor Yeap *et al.* disclosed a technique for combining subband signals before transmission and/or storage which uses an analysis filter bank to produce a plurality of subband signals, interpolates the subband signals and combines the interpolated signals for transmission/storage, specifically by using them to modulate a corresponding plurality of carrier signals which then are added to form the encoded signal to be transmitted and/or stored. Upon reception/retrieval, the signal is decomposed into subband signals again which are decimated and applied to a synthesis filter to reconstruct the original signal.

Although interpolating the subband signals, and using them to modulate one or more carrier signals to be transmitted as a single signal, avoids duplication of transmission/recording channels and allows better recovery of the original signal in the presence of attenuation and radio frequency interference, i.e. from radio stations, the system disclosed in WO 9809383 is not entirely satisfactory. One disadvantage is that the transmitted/recorded signals may still be susceptible to impulse noise, which characteristically occupies a very wide frequency spectrum for a relatively short duration. Another disadvantage is that the modulation of carriers results in a passband signal only, and the bandwidth is proportional to the number of carriers, which have different center frequencies.

The present invention seeks to mitigate one or more of the disadvantages of the known systems and provide a method and apparatus for encoding digital signals using subband signals, specific embodiments of which are less susceptible to distortion and others to corruption by impulse noise.

### DISCLOSURE OF INVENTION:

According to one aspect of the present invention, there is provided apparatus comprising an encoder for encoding a digital input signal for transmission or storage and a decoder for decoding such encoded signal to reconstruct the input signal, the encoder comprising analysis filter bank means for analyzing the input signal into a plurality of subband signals, each subband centered at a respective one of a corresponding plurality of frequencies, interpolation means for upsampling and interpolating each subband signal to provide a plurality of interpolated subband signals all occupying the same frequency band; and combining means for combining the interpolated subband signals to form the encoded signal for transmission or storage; and the decoder comprising synthesis filter bank means complementary to said analysis filter bank means for producing a decoded signal corresponding to the input signal, extracting means for extracting the interpolated subband signals from the received encoded signal; and decimator means for decimating each of the plurality of extracted interpolated subband signals to remove an equivalent number of samples to those interpolated during encoding and applying the decimated signals to the synthesis filter bank means, the synthesis filter bank means processing the plurality of decimated signals to reconstruct said input signal, characterized in that, in the encoder, the combining means so combines the plurality of interpolated subband signals within the encoded signal that said interpolated subband signals occupy the same frequency band and the decoder separates the interpolated subband signals extracted from the same frequency band.

In one embodiment of this first aspect of the invention, the combining means combines at least one pair of said interpolated subband signals substantially orthogonally to provide a combined signal comprising two orthogonal components each containing information from both subbands, and uses said combined signal to provide said encoded signal, and in the decoder, the means for extracting the interpolated subband signals comprises means for orthogonally demodulating the received signal to extract said pair of subband signals.

It should be noted that the term "substantially orthogonally" embraces signals which are orthogonal or pseudo-orthogonal.

Preferably, the combining means uses quadrature amplitude modulation or (QAM) or carrierless amplitude modulation (CAP) to provide such orthogonal modulation.

In a second embodiment of the invention, the combining means time-division multiplexes the plurality of interpolated subband signals to form said encoded signal and, in the decoder, the extracting means use time-division demultiplexing to extract the received interpolated subband signals.

Preferably the time-division multiplexing is performed before the upsampling and interpolation.

According to second and third aspects of the invention, there are provided the aforementioned encoder *per se* and aforementioned decoder *per se.*

According to a fourth aspect of the invention, there is provided a method of encoding a digital input signal for transmission or storage and decoding such encoded signal to reconstruct the input signal, comprising the steps of:
(i) using an analysis filter bank means, analyzing the input signal into a plurality of subband signals, each subband centered at a respective one of a corresponding plurality of frequencies;
(ii) upsampling and interpolating each subband signal to provide a plurality of interpolated subband signals all occupying the same frequency band; and
(iii) combining the interpolated subband signals to form the encoded signal;
   the decoding comprising the steps of:
(iv) extracting the interpolated subband signals from the received encoded signal;
(v) decimating each of the plurality of extracted interpolated subband signals to remove a number of samples equivalent to those interpolated during encoding; and
(vi) using synthesis filter bank means complementary to said analysis filter bank means, processing the plurality of decimated subband signals to reconstruct said input signal, characterized in that, during encoding, the plurality of interpolated subband signals are so combined within the encoded signal that said interpolated subband signals occupy the same frequency band arid the decoder separates the interpolated subband signals during extraction.

In one embodiment of this fourth aspect of the invention, the combining of the interpolated subband signals combines at least one pair of said interpolated subband signals substantially orthogonally to provide a combined signal comprising two orthogonal components each comprising information from both of the interpolated signals, and uses said combined signal to provide said encoded signal having two spectral lobes, each containing information from both interpolated subband signals, and at a decoder, the step of extracting the interpolated subband signals uses orthogonal carrier signals to demodulate the received signal and extract said pair of interpolated subband signals from the received encoded signal.

Preferably, the orthogonal combining of the interpolated subband signals uses QAM or CAP, and the extraction of the interpolated subband signals from the received signal uses complementary demodulation.

In a second embodiment of this fourth aspect of the invention, the plurality of interpolated subband signals are time-division multiplexed to form the encoded signal and, in the decoder, the received signal is time-division demultiplexed during extraction of the received plurality of interpolated subband signals.

Preferably the time division multiplexing is performed before the upsampling and interpolation, and the demultiplexing and downsampling conversely.

According to fifth and sixth aspects of the invention, there are provided the afore-mentioned encoding steps *per se* and aforementioned decoding steps *per se.*

The upsampling produces duplicates, and the interpolation filters select corresponding duplicates of the plurality of upsampled subband signals so that interpolated subband signals have substantially identical bandwidths which, preferably, optimize transmission/storage channel bandwidth utilization. For subscriber loops, a lowpass filter may be used for interpolation and duplicate selection. For other applications, a bandpass or highpass filter may be used.

In embodiments of any aspects of the invention, the upsampling rate may be equal to the number of subbands produced by the analysis filter bank means.

### BRIEF DESCRIPTION OF THE DRAWINGS:

Various objects, features, aspects and advantages of the present invention will become more apparent from the following detailed description, of preferred embodiments of the invention, taken in conjunction with the accompanying drawings, which are described by way of example only.
Figure 1 is a simplified block schematic diagram illustrating a transmission system including an encoder and decoder embodying the invention;
Figure 2 is a block schematic diagram of the encoder and decoder of Figure 1;
Figure 3 is a detail diagram of an analysis filter bank and a synthesis filter bank of the encoder and decoder, respectively;
Figure 4 is a simplified block schematic diagram of an encoder which uses TDM to combine the interpolated signals;
Figure 5 is a TDM decoder complementary to the encoder of Figure 4;
Figure 6 is a block schematic diagram of an alternative TDM encoder using only two subband signals;
Figure 7 is a block schematic diagram of a TDM decoder complementary to the encoder of Figure 6;
Figure 8 illustrates a delay bank suitable for use in either the encoders or the decoders;
Figure 9A illustrates the frequency spectrum of an input signal I;
Figure 9B illustrates the frequency spectra of two narrowband signals produced in the analysis filter bank, before downsampling;
Figure 9C illustrates the spectra of the subband signals produced by downsampling the narrowband signals;
Figure 9D illustrates the spectra of the subband signals after upsampling;
Figure 10 illustrates the frequency spectrum of the encoded signal S' from the TDM encoder of Figure 6;
Figure 11 is a block schematic diagram of an encoder which uses quadrature amplitude modulation (QAM) of two subband signals;
Figure 12 is a block schematic diagram of a QAM decoder for decoding signals from the encoder of Figure 11;
Figures 13A and 13B illustrate frequency spectra of the interpolated subband signals obtained by filtering the upsampled subband signals;
Figure 14 illustrates the frequency spectrum of the output signal of the QAM encoder;
Figure 15 illustrates, as an example, in the time domain, a much simplified two-tone input signal I applied to the QAM encoder of Figure 11;
Figure 16 illustrates the frequency spectrum of the input signal I;
Figures 17A, 17B, 17C and 17D illustrate the subband signals S₀, S₁, S₂ and S₃, respectively, produced by analysis filtering of the input signal I of Figure 16;
Figure 18 illustrates, in the time-domain, the encoded signal E₀ obtained by quadrature amplitude modulation of subband signals S₀ and S₁;
Figure 19 illustrates the frequency spectrum of the encoded signal E₀;
Figure 20 illustrates the corresponding decoded signal I'
Figure 21 illustrates, in the time domain, the encoded signal E₀" following optional bandpass filtering;
Figure 22 illustrates the frequency spectrum of the encoded signal E₀" following optional bandpass filtering;
Figure 23 illustrates the decoded signal I' obtained by decoding the bandpass-filtered signal E₀";
Figure 24 illustrates a multiresolution analysis filter bank which provides multi-resolution by means of three-stage Discrete Wavelet Transform decomposition using a pyramid algorithm; and
Figure 25 illustrates a corresponding multi-resolution synthesis filter bank using three-stage synthesis.

### BEST MODES FOR CARRYING OUT THE INVENTION

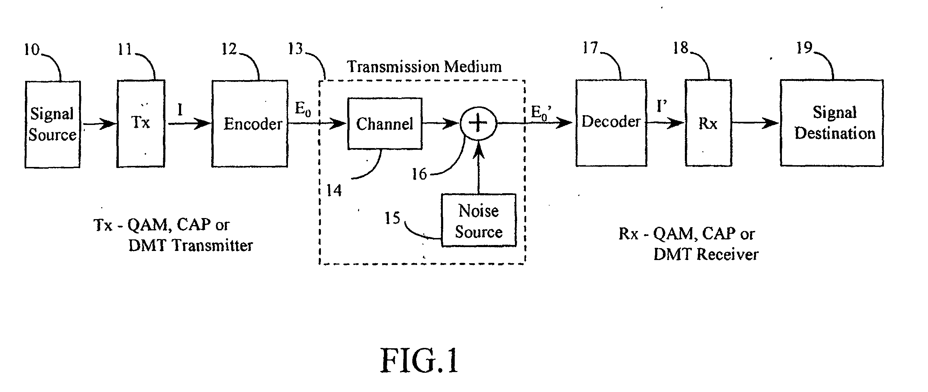

A transmission system embodying the present invention is illustrated in Figure 1. The system comprises digital input signal source 10, a transmitter 11, an encoder 12, transmission medium 13, decoder 17, receiver 18 and signal destination 19. The transmitter 11 may use a known form of modulation, such as Quadrature Amplitude Modulation (QAM), Carrierless Amplitude/Phase Modulation (CAP), Discrete Multitone Modulation (DMT) or a variety of other forms of modulation that produce a digital signal I directly; or produce a signal that can be sampled to produce digital signal I. Encoder 12 encodes the digital signal I to provide an encoded signal E₀ which it applies to the transmission medium 13. The transmitter 11 and receiver 18 may be constructed in a manner that is well known to persons skilled in this art and so will not be described in detail here.

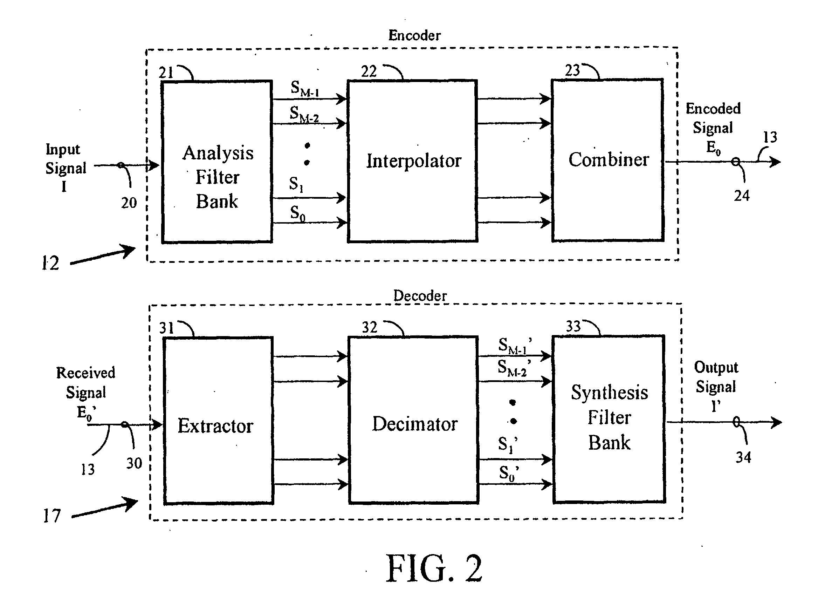

The encoder 12 and decoder 17 are shown in more detail in Figure 2. Input signal I from signal source 10 is applied to the encoder 12 in which it is encoded by means of an analysis filter bank 21 to provide subband signals. Interpolator 22 interpolates the subband signals so that the interpolated subband signals all occupy the same frequency band, and combining means 23 combines them and supplies the resulting encoded signal E₀ to transmission medium 13, which is represented by a transmission channel 14, noise source 15 and summer 16, the latter combining noise with the signal in the transmission channel 14 before it reaches the decoder 17. The decoder 17 uses an extraction means 31 to separate the received interpolated subband signals and a decimator 32 to decimate the extracted interpolated subband signals at the same rate as the upsampling used in the encoder. Synthesis filter bank 33 processes the decimated signals to provide a decoded signal I' which is a "perfect" or "pseudo-perfect" reconstruction of the input signal I.

It should be appreciated that the transmission medium 13 could be a storage medium instead, such as a video/audio recorder, computer storage device, and so on, and the same schematic representation would apply by analogy.

The output of the decoder 17 is supplied to the receiver 18. The usable bandwidth of channel 14 dictates the maximum allowable rate at which a signal can be transmitted over the channel.

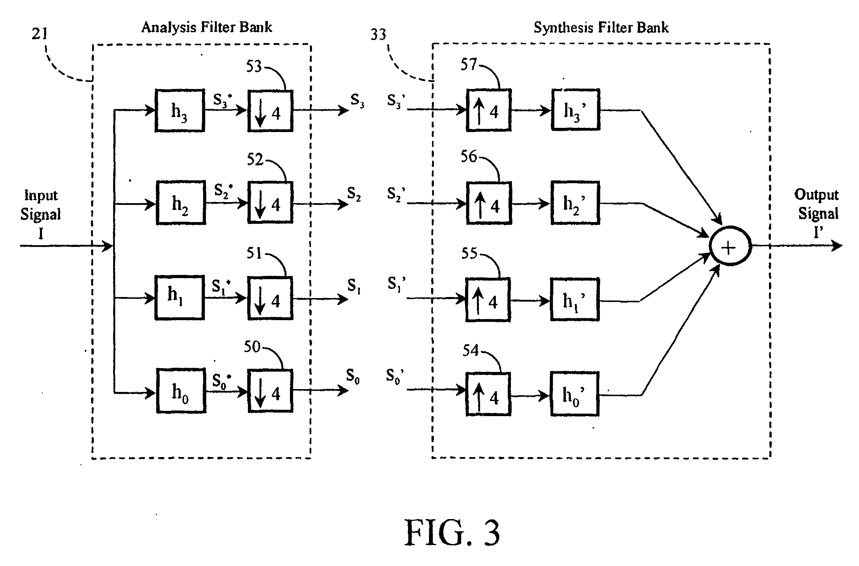

A suitable uniform four-channel analysis filter bank 21 and a complementary synthesis filter bank 33 are illustrated in Figure 3. The analysis filter bank 21 comprises four narrowband filters, namely lowpass filter h₀, bandpass filters h₁ and h₂, and highpass filter h₃, with their inputs connected in common to receive the digital input signal I and filter it to produce four narrowband signals S₀*, S₁*, S₂* and S₃*, respectively, which are downsampled by downsamplers 50, 51, 52 and 53 to produce four corresponding subband signals S₀, S₁, S₂ and S₃, respectively, which are supplied to the interpolator 22 (Figure 2). Assuming that the input signal I has a sample rate of N, the subband signals each have a sample rate of N/4.

In the complementary synthesis filter bank 33, the extracted decimated signals S₀', S₁', S₂' and S₃' are upsampled by upsamplers 54, 55, 56 and 57, respectively, and supplied to a lowpass filter h₀', two bandpass filters h₁' and h₂', and a highpass filter h₃', respectively. The filtered signals are summed by summing device 58 to form the decoded output signal I'.

It should be noted that some of the subband signal pairs in Figure 2 may not need to be transmitted. For example, they may contain little transmission power as compared with other subband signals. When these subband signals are not transmitted, the synthesis filter bank 33 shown in Figure 3 will insert "zero" level signals in place of the missing subband signals. The reconstructed signal I' would then be only a close approximation to the original input signal I. Generally, the more subbands used, the better the approximation.

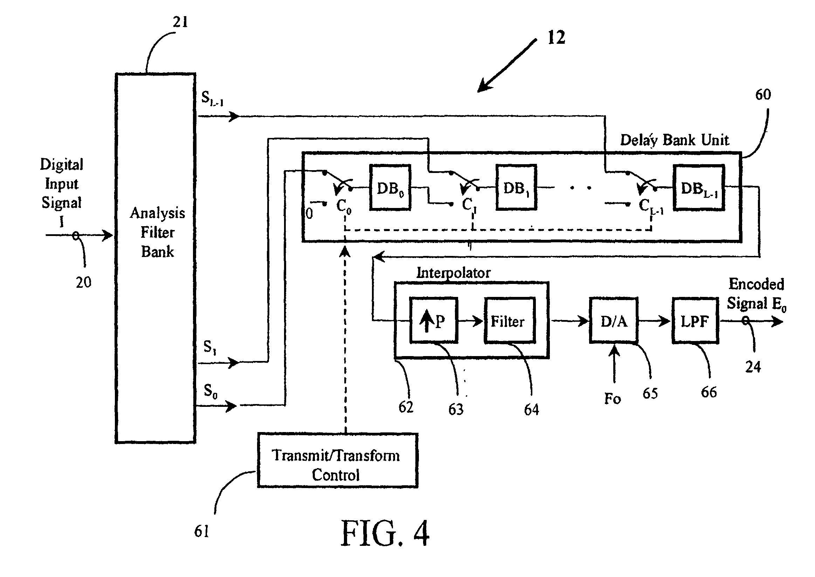

Embodiments of the invention, which use Time-Division Multiplexing (TDM) to combine the interpolated subband signals, will now be described with reference to Figures 4 to 10.

Referring to Figure 4, in a TDM encoder 12, the digital input signal I is applied via input port 20 to an analysis filter bank 21 which subdivides the signal into a plurality of subband signals, as will be described in more detail later. A selection of the subband signals S₀, S₁ ... S_{L-1} are applied to a corresponding plurality of delay banks DB₀ through DB_{L-1}, respectively, in time division multiplexing (TDM) unit 60. The time division multiplexing unit 60 multiplexes the selected subset of subband signals S₀ to S_{L-1} to produce a serial signal. This is necessary because the analysis filter bank 21 generates the individual values of the subband signals S₀ to S_{L-1} simultaneously, i.e., in parallel.

The inputs of the delay banks DB₀ - DB_{L-1} are connected to the poles of a set of changeover switches C₀ - C_{L-1}, respectively. One terminal of each of the switches C₀ - C_{L-1} is connected to a corresponding one of the outputs of the analysis filter bank 21 and, with the exception of switch C₀, the other terminal is connected to the output of the preceding one of the delay banks DB₀ - DB_{L-1}. The other terminal of switch C₀ is connected to a suitable source of a zero value. Hence, a first setting of the switches C₀ - C_{L-1} connects the delay banks DB₁ through DB_{L-1} in parallel to respective outputs of the analysis filter bank 21 to receive the subband signals S₀ to S_{L-1}, respectively. A second setting of switches C₀ - C_{L-1} connects the delay banks DB₀ through DB_{L-1} in series with each other to receive a series of zero values. The switches C₀ - C_{L-1} are controlled by a transmit/transform control unit 61 which switches them alternately between their first and second settings. With the switches in the first setting, each of the delay banks DB₀ through DB_{L-1} is filled with a string of values of the corresponding subband signal, which values will be clocked into the delay bank under the control of a clock (not shown) until it reaches capacity. When the delay banks DB₀ through DB_{L-1} are all full, the control unit 61 operates switches C₀ - C_{L-1} and, in the second setting, the contents of the delay banks are clocked out serially.

In this particular embodiment, the computations by the analysis filter bank 21 are suspended while the TDM unit 60 is outputting the serial stream of values. As will be described later, in practice, the delay banks DB₀ through DB_{L-1} could be duplicated so as to provide a continuous signal without interrupting computations.

The multiplexed values from the output of the time division multiplexing unit 60 are applied to an interpolation unit 62 which comprises an upsampler 63 and an interpolation filter 64. The upsampling rate P will be determined according to specific system requirements, such as the number of subbands (N) created by the analysis filter bank 21 and desired degree of expansion of each subband signal, but generally will be at such a rate that the bandwidth of each upsampled subband signal will be equal to or slightly less than the bandwidth of the transmission channel 14.

The interpolation filter 64 interpolates between each pair of actual sample values to provide an interpolated sample value for insertion in the or each intervening upsampled bit interval. The interpolated signal Sᵢ^{#} and Sⱼ^{#} are converted to an analog signal by a digital-to-analog converter 65, with a sampling rate F₀, and a lowpass filter 66 removes quantization noise before supplying the encoded signal E₀ to output port 24 connected to the transmission medium 13.

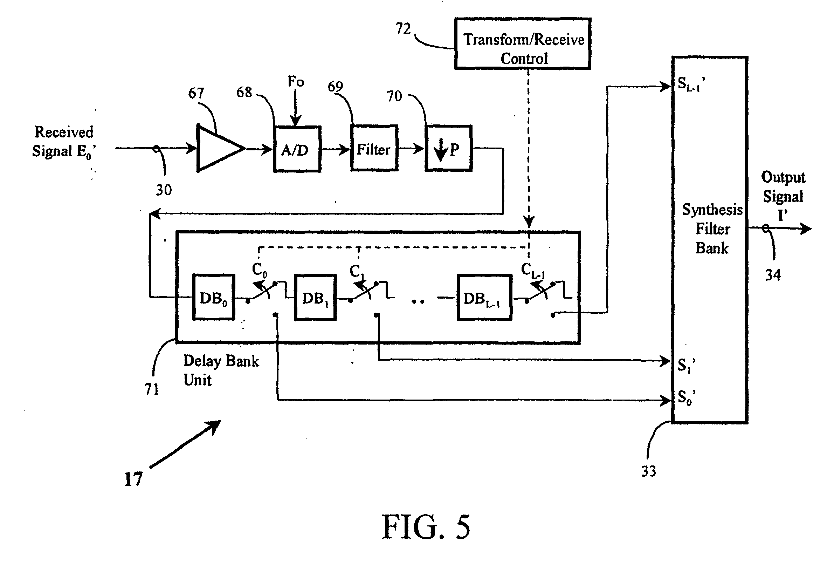

The processing of the received encoded signal E₀ in the decoder 17, to reconstruct the original signal I, will now be described with reference to Figure 5. In the decoder 17, the signal from the transmission medium 13 is received via port 30 and supplied to a typical receiver front end unit represented by amplifier 67 for amplifying the attenuated signal. The amplified signal from amplifier 67 is converted by an analog-to-digital converter 68 which has a sampling rate F₀ that is the same as the sampling rate of D/A converter 65 (Figure 4). Typically, if the upsampling rate P is equal to the downsampling rate, then output sampling rate F₀ is equal to L (number of selected subbands) multiplied by Fₛ, the input signal sampling frequency. Thus, for two subbands, F₀ = 2Fₛ. A bandpass filter 69 with a bandwidth equivalent to that of the transmission medium 13 filters the digital signal to remove noise occurring outside the channel bandwidth, following which the filtered digital signal is downsampled by a downsampler 70. The downsampling rate P is the same as the upsampling rate of upsampler 63 (Figure 4). The downsampled signal is demultiplexed by demultiplexing unit 71 which is similar in configuration to the multiplexer unit 60 of Figure 4 in that it comprises a series of delay banks DB₀, DB₁, ... DB_{L-1} interconnected by switches C₀ - C_{L-1} controlled by a transform/receive control unit 72, but differs in that they are connected in reverse order.

The transform/receive control unit 72 operates the switches C₀ - C_{L-1} so that the delay banks DB₀ through DB_{L-1} accumulate the values of the received signal and, when a complete sequence has been stored in the delay banks DB₀-DB_{L-1}, connects them in parallel to output their contents to the respective inputs of a synthesis filter bank 33 which recombines them to recover the original signal which it provides as output signal I' at output port 34.

The analysis filter bank 21 and the synthesis filter bank 33 (Figure 3) are complementary and designed to provide "pseudo perfect reconstruction" as described earlier.

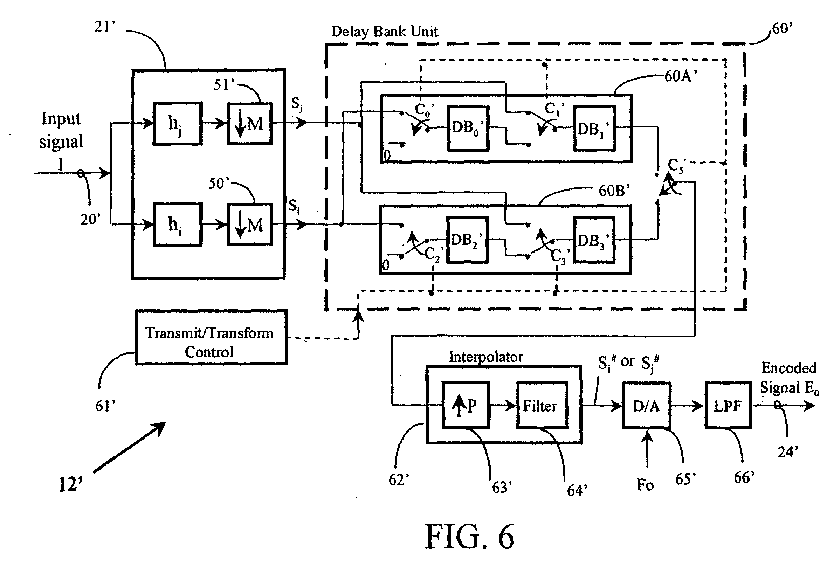

It is desirable for the analysis filter bank 21 to perform its computations continuously. An encoder which uses only two subband signals and processes them continuously will now be described, by way of example, with reference to Figure 6, in which components corresponding or identical to components in Figure 4 have the same reference numeral, but with a prime. Thus, the digital input signal I supplied to input port 20' of analysis filter bank 21' is applied in common to narrowband filters hᵢ and hⱼ. The narrowband signals from the filters hᵢ and hⱼ are downsampled by downsamplers 50' and 51', respectively, to form subband signals Sᵢ and Sⱼ. The two subband signals Sᵢ and Sⱼ are multiplexed by a time division multiplex unit 60' which differs from that in Figure 4 in that it comprises two delay bank units 60A' and 60B' which both operate upon the two subband signals Sᵢ and Sⱼ alternately. There are only two subband signals, so each of the delay bank units 60A' and 60B' comprises two delay banks DB₀' and DB₁', which may be identical to those in Figure 4. The length of each of these delay banks DB₀' and DB₁' would be a design decision and typically might be 128 or 256 integers long. It should be noted that, in this case, each output from the analysis filter bank 21 (Figure 4) will be an integer number.

In delay bank unit 60A', switch Cₒ' connects the input of first delay DB₀' to either the output of the downsampler 50' in analysis filter bank 21' to receive subband signal Sᵢ, or to a zero value point. Second switch C₁' connects the input of second delay bank DB₁' to the output of downsampler 51' in the analysis filter 21' to receive subband signal Sⱼ; or to the output of delay bank DB₀'.

Delay bank unit 60B' comprises two delay banks DB₂' and DB₃' and two switches C₂' and C₃' connected in a similar manner to those of delay bank unit 60A', but switches C₂' and C₃' are poled oppositely to switches C₀' and C₁' of delay bank unit 60A'. The outputs of delay bank units 60A' and 60B' are connected to respective terminals of a selector switch C₅, the pole of which is connected to the input of interpolating unit 62'.

The switches C₀' to C₅' are controlled by transmit/transform control unit 61' so that, when subband signal values are being clocked into the delay banks DB₀' and DB₁' of delay bank unit 60A', the values in the delay banks DB₂' and DB₃' of delay bank unit 60B' are being clocked out to the interpolation unit 61' and replaced by zeros. Conversely, when the subband signal values are being clocked into delay banks DB₂' and DB₃', the values in delay banks DB₀' and DB₁' are being clocked out to the interpolation unit 61'.

As before, the interpolation unit 62' comprises an upsampler 63', which upsamples the time-multiplexed subband signals by a factor P which is related to the downsampling rate and the sampling rate Fₛ as described previously. The interpolation filter 64' may be a Raise-Cosine filter or other low pass filter, or a bandpass filter, depending upon the application. As previously described, the serial data stream then is converted by D/A converter 65' and the resulting analog signal filtered by lowpass filter 66' to remove quantization noise before being applied to the transmission medium 13 as signal E₀.

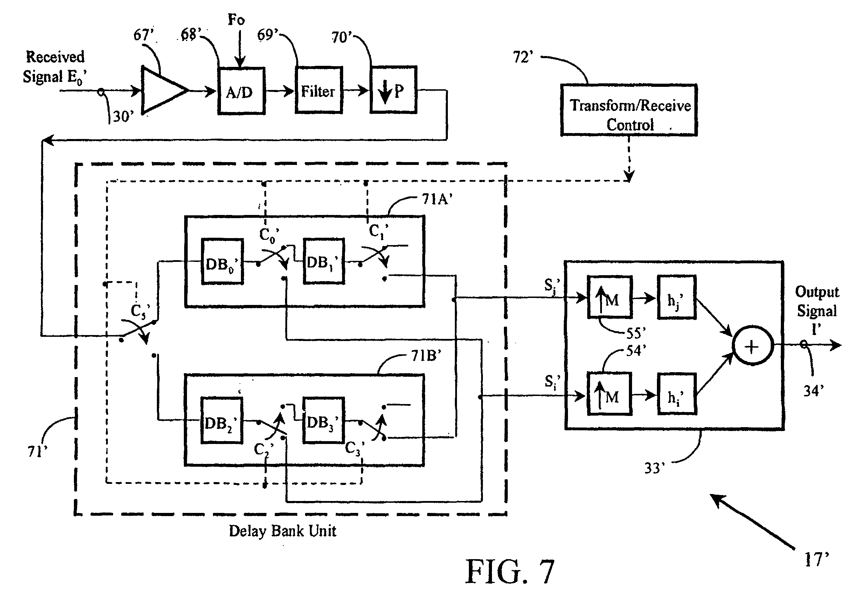

Referring now to Figure 7, the corresponding decoder 17' comprises an input port 30' whereby the received encoded signal is applied to an amplifier 67', A/D converter 68', filter 69' and downsampler 70' which process is in the manner previously described with reference to the corresponding components shown in Figure 5. Filter 69' will have the substantially same bandwidth as filter 64' in the encoder (Figure 6). Demultiplexing unit 71' is similar to the multiplexing unit 60' in the encoder of Figure 6 in that it comprises two delay bank units 71A' and 71B' connected in parallel between the output of downsampler 70' and synthesis filter bank 33'. Delay bank unit 71A' comprises two delay banks DB₀' and DB₁', and two changeover switches C₀' and C₁'. The output of delay bank DB₁' is connected to the pole of switch C₁', which has one of its terminals connected to one of the inputs of synthesis filter 33' and the other free. The output of delay bank DB₀' is connected to the pole switch C₀' which has one of its terminals connected to the input of delay bank DB₁' and the other terminal connected to the other input of synthesis filter 33'.

The second delay bank unit 71B' is similar to first delay bank unit 71A' in that it comprises delay banks DB₂' and DB₃' and switches C₂' and C₃'. The inputs of delay bank DB₀' of delay bank unit 71A' and delay bank DB₂' of delay bank unit 71B' are connected to the first and second terminals, respectively, of a changeover switch C₅', the pole of which is connected to the output of downsampler 70'. The five switches C₀' - C₅' are controlled by transform/receive control unit 72'. The switches C₀' and C₁' are poled oppositely to switches C₂' and C₃' so that, when values of the downsampled received signal are being clocked into delay bank unit 71A, the previously-stored values are being clocked out of delay bank unit 71B' to the synthesis filter bank 33' and vice versa.

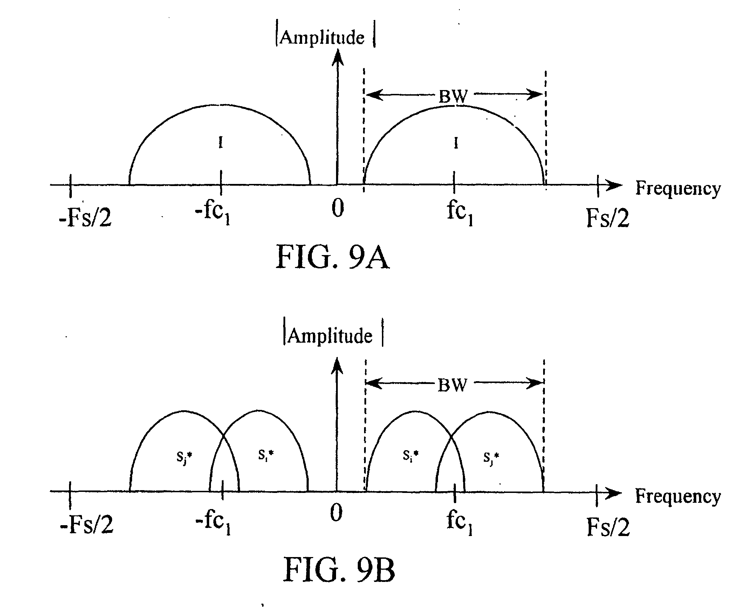

Each of the delay banks DB₀ - DB_{L-1} in Figures 4, 5, 6 and 7 is identical to the others. One of them is illustrated in Figure 8 and comprises a series of unit delay elements Z⁻¹ = M/Fₛ where M is the downsampling rate in the analysis filter bank 21 for a maximally decimated filter and Fs is the sampling frequency of the digital input signal I.

Operation of the encoder of Figure 6 will now be described with reference also to Figures 9A, 9B, 9C, 9D, 10A, 10B and 11 which illustrate, in very simplified form, the various signals in the encoder. Thus, Figure 9A shows the frequency spectrum of a digital input signal I having a bandwidth BW which would be about 8 MHz centered upon a centre frequency fc₁ of 5 MHz. These are typical values for a digital input signal I that is produced by Quadrature Amplitude Modulation (QAM) as proposed for Very high speed Digital Subscriber Loop (VDSL) applications. The maximum frequency of the input signal I is around 9 MHz which is somewhat less than half of the sampling frequency Fₛ used by the QAM system which, for example, might range from at least 24 MHz to as much as 50 or 60 MHz. The frequency spectrum is symmetrical about the zero ordinal, i.e., there are two conjugate lobes that are symmetrical about zero. The frequency spectrum of a digital input signal I produced by Carrierless Amplitude Phase Modulation (CAP) would be similar.

Figure 9B illustrates the two narrowband signals Sᵢ* and Sⱼ* which are obtained by passing the digital input signal I through bandpass filters hᵢ and hⱼ, respectively (Figure 6). At each side of the zero ordinal, the two narrowband signals Sᵢ* and Sⱼ* generally occupy higher- and lower- frequency portions of the bandwidth BW and overlap adjacent the centre frequency fc₁. This overlapping of the two narrowband signals Sᵢ* and Sⱼ* is characteristic of analysis filter banks used for so-called pseudo-perfect reconstruction or perfect reconstruction.

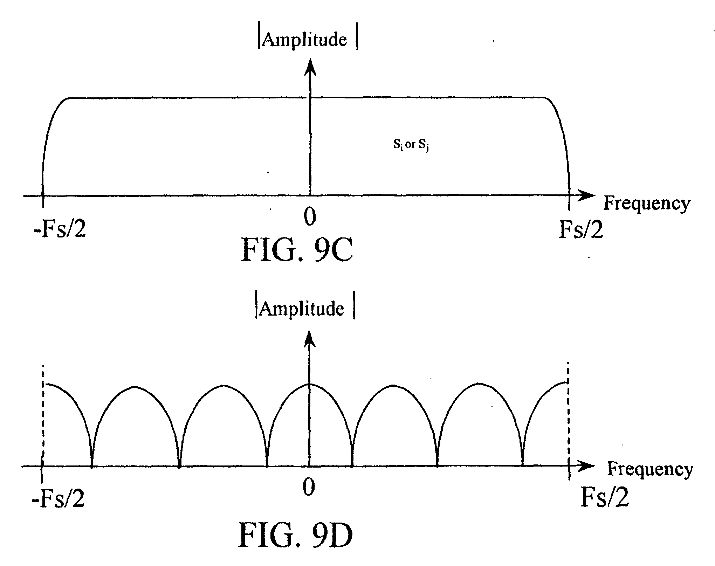

When the narrowband signals Sᵢ* and Sⱼ* are downsampled by a factor of M, their bandwidth increases by the factor M. For the example of Figure 9B, the subband signals Sᵢ* and Sⱼ* each occupy at least 6 MHz, so the downsampled signals Sᵢ* and Sⱼ* at the outputs of analysis filter bank 21' (Figure 6) each occupy the available bandwidth for a sampling frequency Fₛ of about 24 MHz minimum, as illustrated in Figure 9C.

When the subband signals are upsampled by upsampler 63' (Figure 6) the bandwidth of the frequency spectrum of each subband signal is reduced and a series of similar, i.e. duplicate, lobes are produced, each centered on a different frequency, as shown in Figure 9D. It should be appreciated that the duplicate lobes shown in Figure 9D would not necessarily be the same for other input signals.

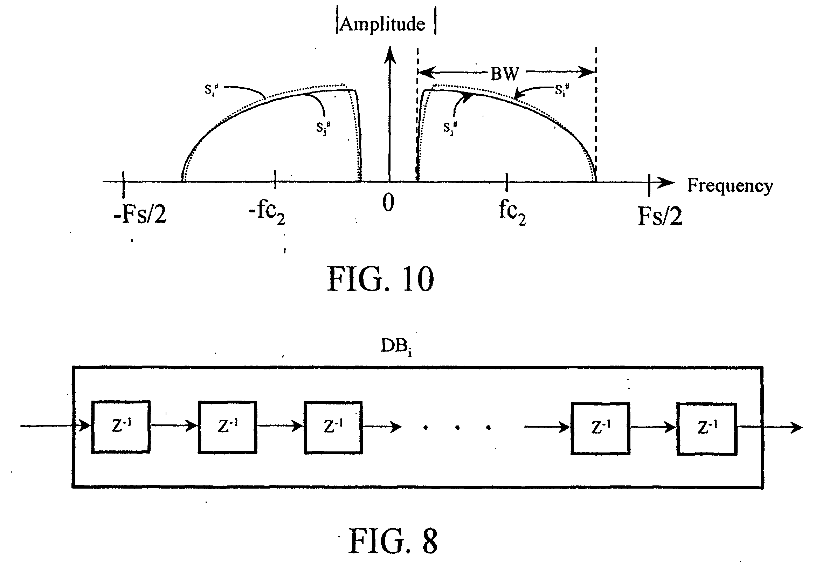

Assuming that interpolation filter 64' is a low frequency bandpass filter, it removes the higher frequency duplicates. As shown in Figure 10, which shows the frequency spectra of the two subband signals Sᵢ' and Sⱼ', after upsampling and filtering, the upsampling rate P is chosen so as to reduce the frequency spectrum so that it is approximately equal to that of the channel bandwidth BW, with centre frequency fc₂. For the QAM input signal, with Fₛ = 20 MHz and M equal to 4, the upsampling rate P would be equal to, or greater than M, i.e. 4. It should be noted that in Figure 10 two spectra are shown, one for Sᵢ' and one for Sⱼ'.

It should be noted that centre frequency fc₂ in Figure 10 is not necessarily the same as the centre frequency fc₁ (Figure 9A) of the input signal I. In the case of a QAM input signal I, fc₁ would be the carrier frequency. For other forms of modulation, it might be defined differently. The centre frequency fc₂ shown in Figure 10 can be controlled so that it is centred upon the bandwidth of the transmission channel 14 itself. This can be done by suitable selection of the characteristics of filter 64' (Figure 6).

More particularly, filter 64' could be a bandpass filter which would both remove lower frequency and higher frequency duplicate lobes, leaving an intermediate lobe.

It should be noted that the system will usually be designed so that the channel bandwidth BW_{CH} will be approximately the same as the bandwidth BW of the input signal I. However, the bandwidth BW of the input signal I will not extend to zero, whereas the bandwidth BW_{CH} of the channel conceivably could extend to zero. In the latter case, filter 64' could be selected to produce a baseband output signal matching the channel bandwidth, thereby optimizing utilization of, for example, a twisted pair subscriber loop.

The filter 64' filters both subband signals Sᵢ and Sⱼ, which alternate in the serial data stream leaving the TDM unit 60'. As can be seen from Figure 10, the frequency spectrum of transmitted subband signal Sᵢ' (shown in broken lines) is almost, but not quite, identical to the frequency spectrum of subband signal Sⱼ'. The two frequency spectra are shown superimposed because, while they occupy substantially much the same bandwidth, i.e. the same frequency band, they occur alternately in the time domain. Consequently, the signal bandwidth in the channel varies only slightly during the transmission as a result of fluctuations between Sᵢ' and Sⱼ'.

A person skilled in this art will be able to infer the corresponding operation of the decoder, and the signals therein, from the description of the encoder, so they will not be described here.

Whereas the encoder of Figure 6 upsamples the subband signals after they have been multiplexed, it should be noted that the individual subband signals could be upsampled and interpolated before being multiplexed. However, an advantage of multiplexing before upsampling is that fewer delay banks are needed. Operation of such a modified encoder would be analogous to that of the encoder of Figure 6 and so will not be described herein.

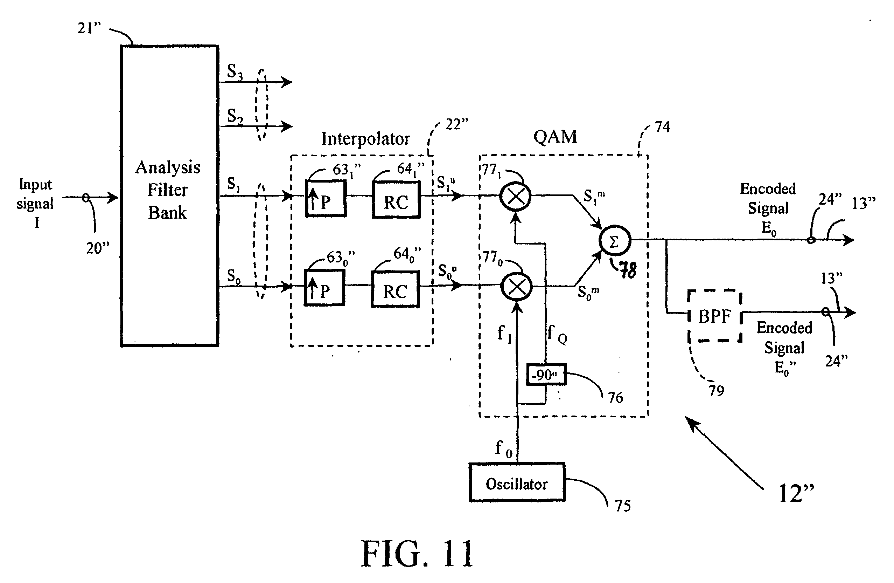

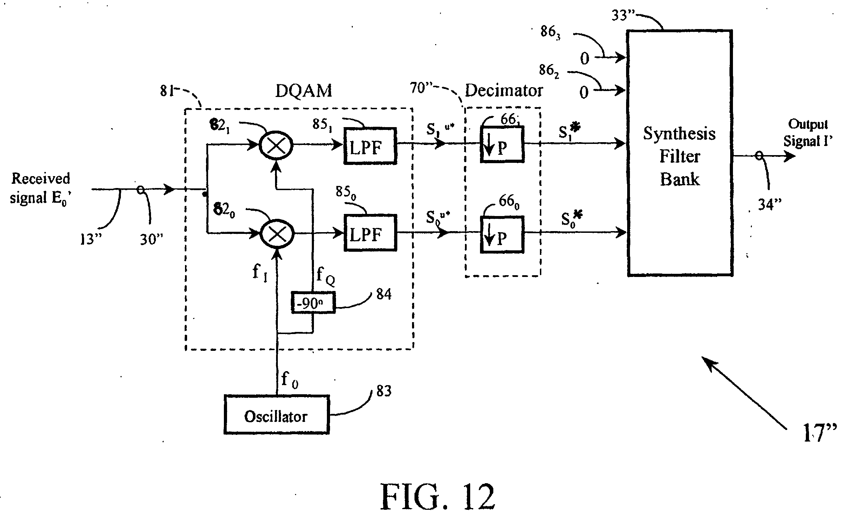

An embodiment of the invention using Quadrature Amplitude Modulation (QAM) rather than TDM will now be described with reference to Figures 11 and 12 in which components corresponding to those in Figures 2 - 7 have the same reference numerals but with a double prime.

In this embodiment, two higher subbands are generated but not transmitted. In the QAM encoder 12" of Figure 11, the input signal I is supplied via input port 20" to an analysis filter bank 21" which generates lowpass subband signal S₀, two bandpass subband signals S₁ and S₂, and the highpass subband signal S₃. In this implementation, only subband signals S₀ and S₁ are processed. Bandpass subband signal S₂ and highpass subband signal S₃ are discarded. Interpolator means 22" interpolates each of the pair of subband signals S₀ and S₁, respectively, by the same factor P, where P is an integer, typically 8 to 24. Thus, within interpolator 22", the subband signals S₀ and S₁ are upsampled by upsamplers 63₀" and 63₁", respectively, which insert zero value samples at intervals between actual samples. The upsampled signals then are filtered by two interpolation filters 64₀" and 64₁", respectively, which insert at each upsampled "zero" point a sample calculated from actual values of previous samples. The interpolation filters 64₀" and 64₁" may be bandpass filters or lowpass filters, but lowpass filters, for example Raised Cosine filters, are preferred so as to minimize intersymbol interference. The two interpolated subband signals S^{u}₀ and S^{u}₁ are supplied to quadrature amplitude modulator 74 which uses them to modulate in-phase and quadrature components f_{I} and f_{Q} of a carrier signal f₀, provided by an oscillator 76, the quadrature component being derived by means of a phase shifter 76. The modulator 74 comprises multipliers 77₀ and 77₁ which multiply the in-phase and quadrature components f_{I}, and f_{Q} by the two interpolated subband signals S₀, and S₁, respectively. The resulting two modulated carrier signals S^{m}₀ and S^{m}₁ are added together by a summer 78 to form the encoded signal E₀ for transmission by way of port 24" to transmission medium 13".

For reasons which will be explained later, the output of the summer 78 may be supplied to transmission medium 13" by way of a filter 79, as shown in broken lines. In this particular example, filter 79 is a bandpass filter.

At the corresponding QAM decoder 17" shown in Figure 12, the signal E'₀ received at port 30" is supplied to a QAM demodulator 81 which comprises multipliers 82₀ and 82₁, which multiply the signal E'ₒ by in-phase and quadrature components f_{I} and f_{Q} of a carrier signal f₀ from an oscillator 83, the quadrature signal f_{Q} being derived by way of phase shifter 84. The frequency fₒ is the same as that used in the QAM encoder 12". The resulting signals are passed through lowpass filters 85₀ and 85₁, respectively, which extract the upsampled versions S^{u}*₀ and S^{u}*₁ which then are decimated by decimators 70₀" and 70₁", respectively, of decimator 70". The resulting recovered subband signals S*₀ and S*₁ are each supplied directly to a corresponding one of two inputs of a synthesis filter bank 33" which uses them to construct the signal I' which corresponds to a reconstruction of the input signal I. In the synthesis filter bank 33" the highpass subband signals S₂ and S₃, which were not transmitted, are each replaced by a "zero" signal at the corresponding "higher" frequency inputs 86₂ and 86₃ of the synthesis filter bank 33". The resulting output signal I' from the synthesis filter bank 33" is the decoder output signal supplied via output port 34", and is a close approximation to the input signal I at the input to the encoder 21" of Figure 11.

If the higher subband signals S₂ and S₃ were used, the encoder 12" would duplicate interpolator 22" and modulator 74 and the decoder 17" would duplicate the DQAM 81 and decimator 70" as appropriate and a suitable synthesis filter bank 33" would use all four subband signals S*₀, S*₁, S*₂ and S*₃.

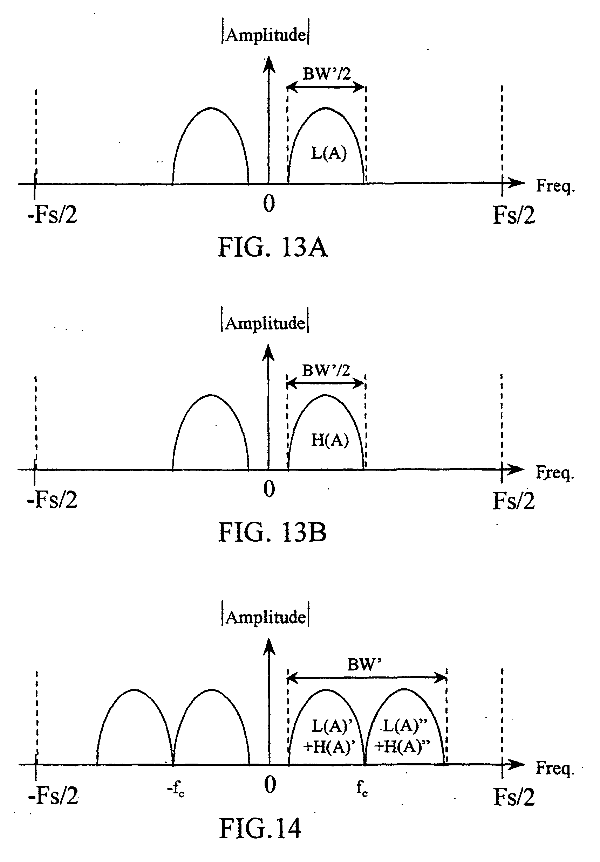

In the QAM encoder 12", the various signals in the analysis filter bank 21" and the interpolator 22" will be the same as those shown in Figures 9A - 9D described previously, the interpolated signals S"₀ and S"₁ being shown again in Figures 13A and 13B.

As shown in Figure 14, following modulation by the QAM means 74, and providing the interpolation filters are bandpass filters, the output signal E₀ from the QAM means 74 has a spectrum which has two lobes, one on each side of the center frequency f₀ of the carrier used by the QAM means 74. The center frequency of the lower frequency lobe is equal to f₀ - Δ, and the center frequency of the upper frequency lobe is equal to f₀ + Δ, where Δ preferably is equal to about one quarter of the bandwidth BW of the original input signal I. However, Δ may vary depending upon the complexity of the input signal and the design of the analysis filter bank 21". The bandwidth BW' is determined in dependence upon the sampling rate Fs of the digital input signal I.

In the aforementioned international patent application number WO 9809383, the subband signals were modulated onto separate carriers having different center frequencies so their frequency spectrum lobes were separated by a guard band and each lobe contained information from its own subband only. By contrast, in this QAM embodiment of the present invention, there is no need for a guard band between the lobes in the output signal E₀. (Figure 11). It should be noted that each lobe contains information from both of the subband signals S₀ and S₁. Thus, as illustrated in Figures 13A, and 13B, the information A contained in the input signal I is split into lower-frequency component L(A) in subband signal Sₒ and higher-frequency component H(A) in subband signal Sᵢ. As shown in Figure 14, after quadrature amplitude modulation, each lobe of encoded signal E₀ contains some of both components L(A) and H(A). Consequently, if one lobe is corrupted, perhaps because of noise or attenuation of higher frequencies, it may still be possible to reconstruct the original signal I. Hence, the transmission is more robust.

It should be appreciated that, if signal compression is desired, perhaps because bandwidth is limited, one of the lobes need not be transmitted. If the lower lobe were to be discarded, a high pass filter could be used to filter the output from encoder 12" in Figure 11. Conversely, if the higher lobe were to be discarded, a low pass filter could be used instead. In the QAM encoder shown in Figure 11, a bandpass filter 79 is shown (in broken lines) for removing the higher lobe. Use of a bandpass filter rather than a low-pass filter allows the portions of the spectrum below and above the lower lobe to be used for other purposes.

It should be noted that this is not the same as single sideband transmission where, although each sideband contains the same information, it is derived from a single source via a single modulated carrier.

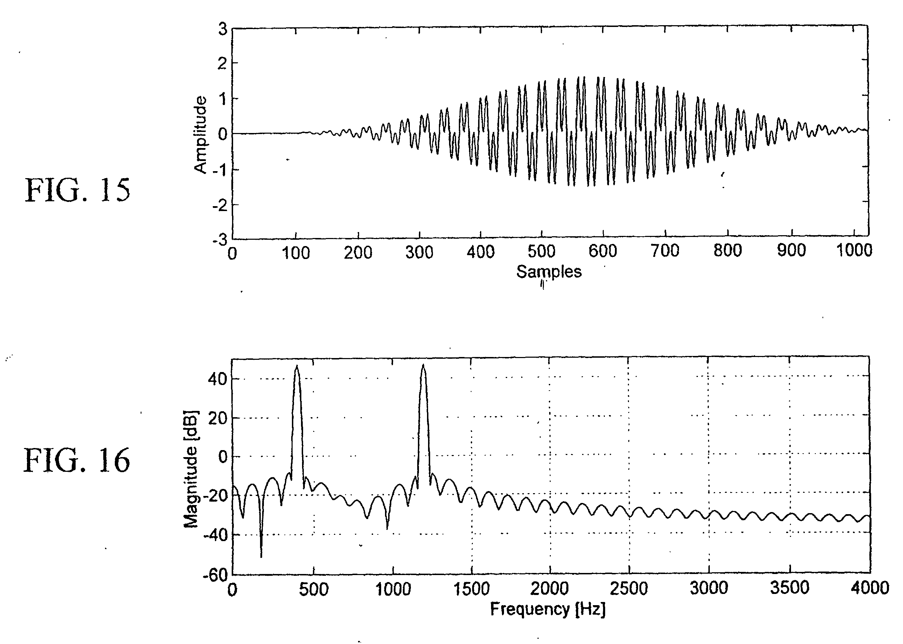

Examples of signals obtained by modelling the QAM encoder 12" and decoder 17" are illustrated in Figures 15 - 23.

Figure 15 illustrates, in the time domain, a very simple input signal I comprising two sinusoidal signals, of 400 Hz and 1200 Hz, respectively. Figure 16 illustrates the corresponding frequency spectrum of this two-tone input signal I.

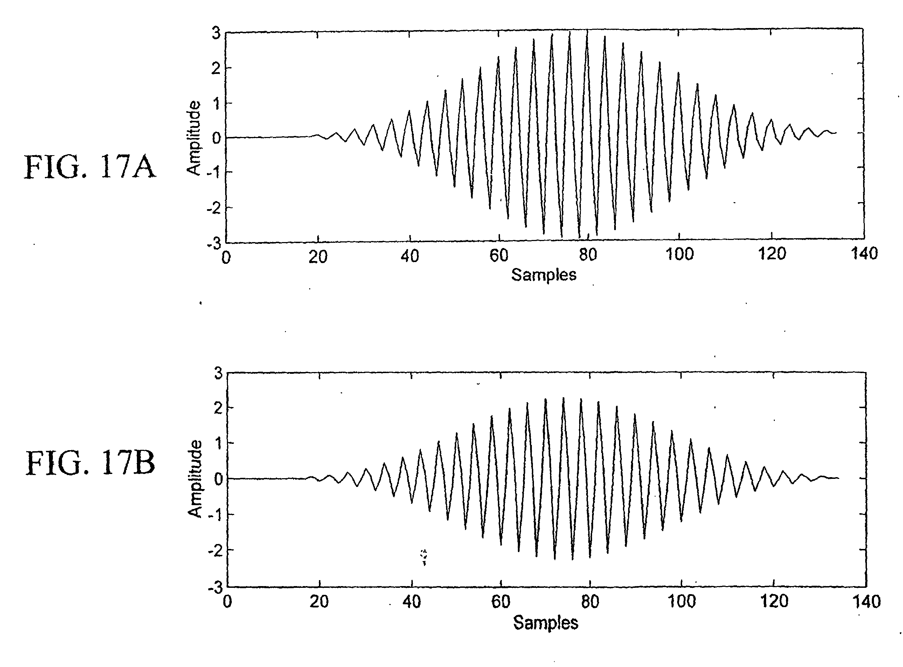

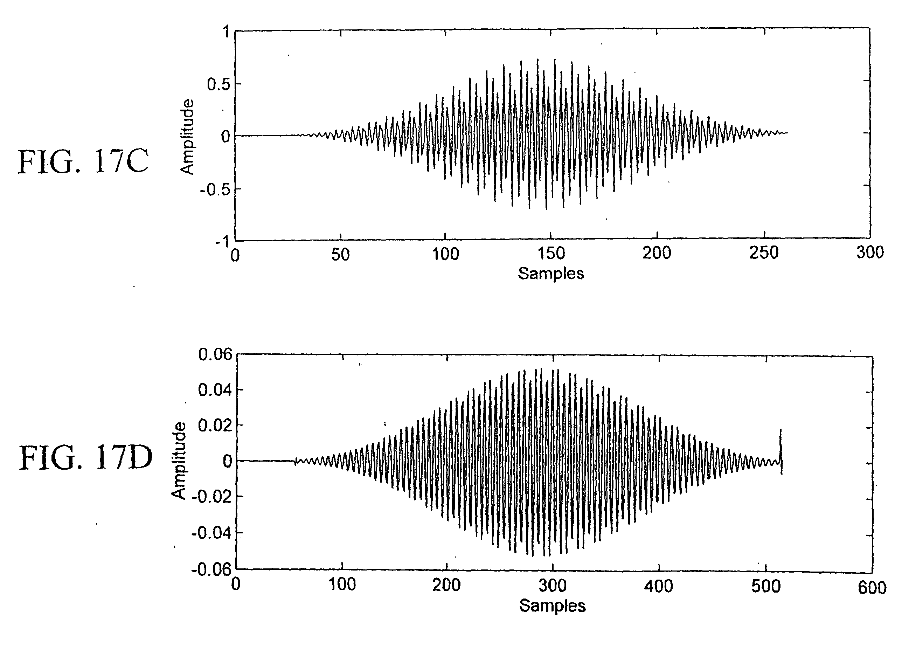

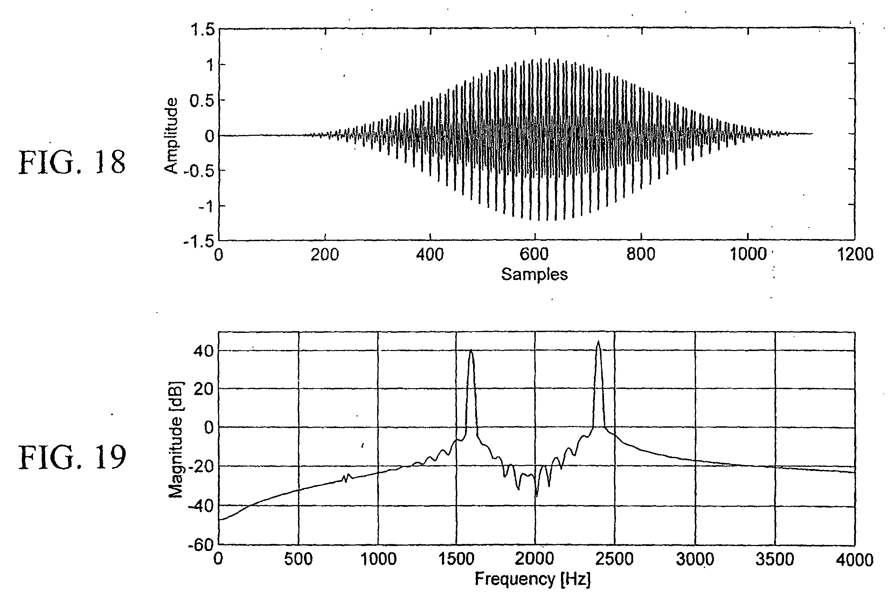

Figures 17A, 17B, 17C and 17D illustrate the corresponding four subband signals S₀, S₁, S₂ and S₃, respectively, obtained by analysis filtering the input signal I. It should be noted that bandpass subband signal S₂ has little energy compared with signals S₀ and S₁ and the energy content of highpass subband signal S₃ is negligible. Hence subband signals S₂ and S₃ are not used in encoding the encoded signal E₀ which is illustrated in Figure 18. As shown in Figure 19, the frequency spectrum of the encoded signal E₀ comprises two lobes, with respective peaks at 1600 Hz and 2400 Hz, i.e. at an offset Δ of 400 Hz either side of a center frequency of 2000 Hz. Some bandpass filtering was applied to remove harmonics.

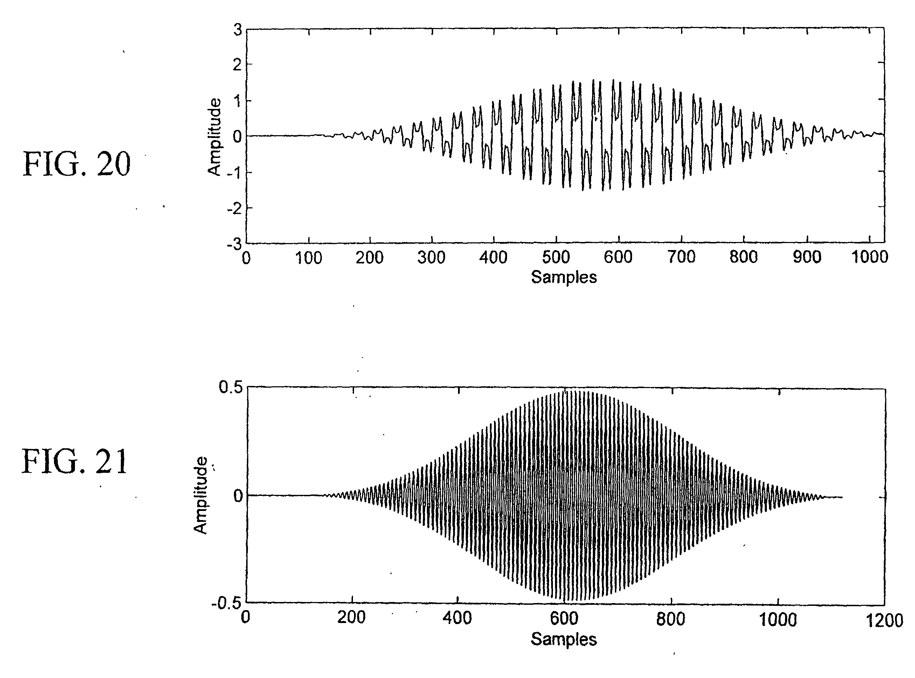

Figure 20 illustrates the corresponding decoded signal I' and shows that the two tones of the original input signal I have been recovered, but without the portion corresponding to omitted subband signals S₂ and S₃. It will be appreciated that, with suitable equalisation, the original digital signal I could be recovered despite this portion of the signal not being transmitted.

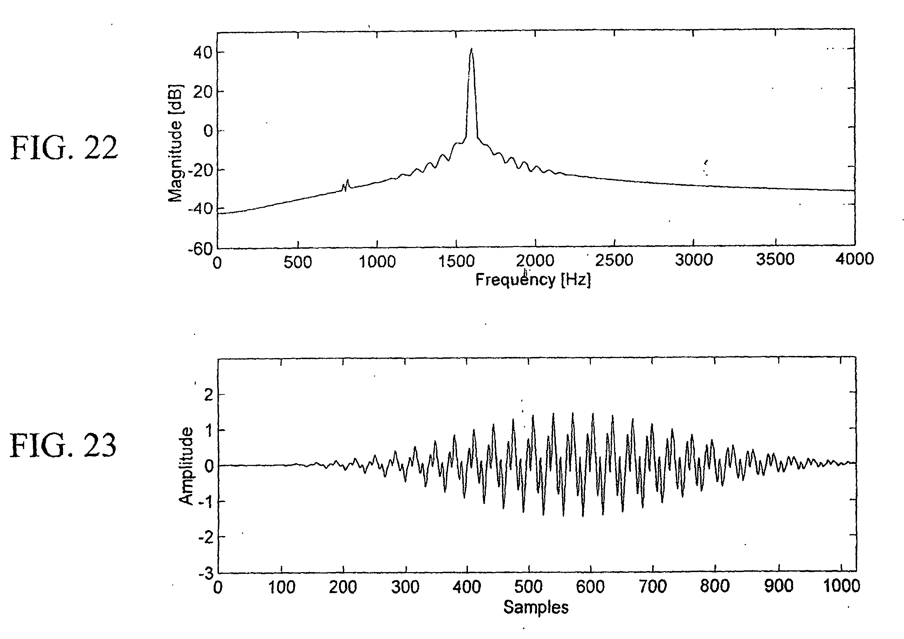

As mentioned previously, a further reduction in bandwidth can be achieved by transmitting only one lobe of the encoded signal E₀, predicated upon the fact that each lobe contains information from both subbands. Thus, Figure 21 illustrates in the time domain the encoded signal E₀ after filtering by bandpass filter 79 to remove the higher-frequency lobe and Figure 22 illustrates the frequency spectrum of the filtered encoded signal E₀. Figure 23 illustrates the corresponding decoded signal I' and shows that, despite the fact that one lobe was not transmitted, the two tones have been recovered by the decoder 17".

It is envisaged that, instead of bandpass filter 79, other means could be used to eliminate one of the lobes of the encoded signal E₀ before transmission/storage. For example, filter 79 could be replaced by a Fast Fourier Transform device, a phase shifting and cancellation circuit, or other suitable means.

Embodiments of the invention which allow higher frequency components and lower frequency components to be intermixed and compressed into a narrower bandwidth than the original signal are especially useful for use with two-wire subscriber loops of telecommunications systems since such loops tend to attenuate higher frequencies disproportionately.

It should be noted that the subband signal bandwidths could be greater than one half of the original signal bandwidth BW, though still less than BW. This would allow a less expensive analysis filter bank to be used.

It should be appreciated that the quadrature amplitude modulation means 74 and interpolator 22" could be combined in a Carrierless Amplitude/Phase (CAP) modulation means which would comprise an in-phase filter means and a quadrature filter means each of which integrates the interpolation of the corresponding subband signal with the multiplier function.

If more subband signal pairs were to be used, an interpolator 22" and QAM 74 would be provided for each additional pair, which would also be interpolated at such a rate that all of the modulated carriers had the same bit rate.

For a large number of subbands, it might be preferable to use a uniform analysis filter bank. However, for many applications it is possible to use a multiresolution analysis filter bank instead, as will be described later.

Various modifications may be made to the above-described embodiments of the invention without departing from the scope of the present invention. For example, the analysis filter bank and synthesis filter bank could be like those described in WO 9809383, or other suitable filter banks such as those disclosed by Akansu.

The analysis filter bank 21 may be replaced by a multiresolution filter bank, for example an octave-band filter bank, perhaps implementing a Discrete Wavelet Transform (DWT) such as is disclosed in International patent application No. WO 9809383, to which the reader is directed for reference.

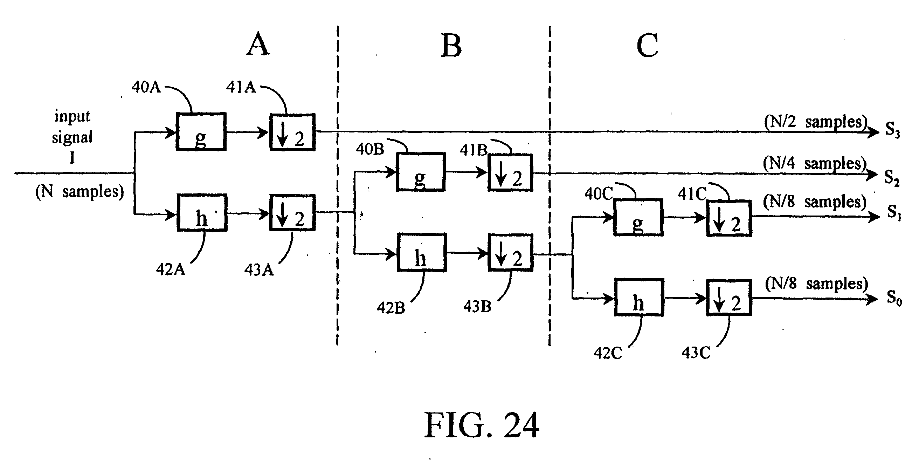

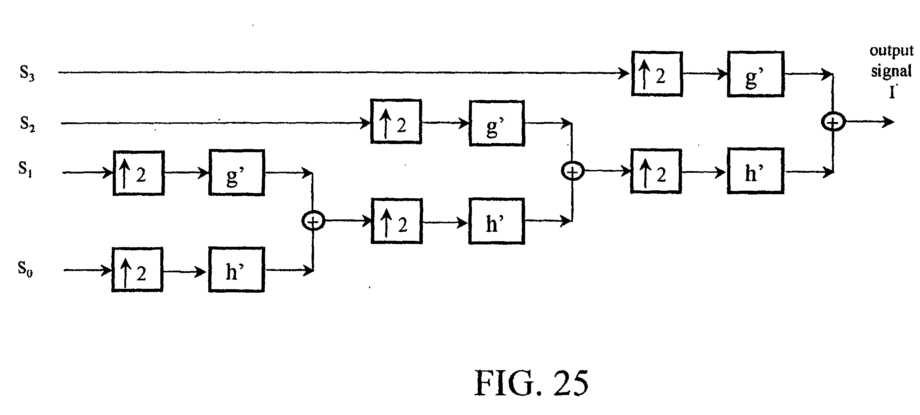

Such a three stage octave-band tree structure for Discrete Wavelet Transformation will now be described with reference to Figures 24 and 25, in which the same components in the different stages have the same reference number but with the suffix letter of the stage.

Referring to Figure 24, the three decomposition stages A, B and C have different sampling rates. Each of the three stages A, B and C comprises a highpass filter 40 in series with a downsampler 41, and a lowpass filter 42 in series with a downsampler 43. The cut-off frequency of each lowpass filter 42 is substantially the same as the cut-off frequency of the associated highpass filter 40. In each stage, the cut-off frequency is equal to one quarter of the sampling rate for that stage.

The N samples of input signal I are supplied in common to the inputs of highpass filter 40A and lowpass filter 42A. The corresponding N high frequency samples from highpass filter 40A are downsampled by a factor of 2 by downsampler 41A and the resulting N/2 samples supplied to the output as the highpass wavelet S₃. The N low frequency samples from lowpass filter 42A are downsampled by a factor of 2 by downsampler 43A and the resulting N/2 samples supplied to stage B where the same procedure is repeated. In stage B, the N/2 higher frequency samples from highpass filter 40B are downsampled by downsampler 41B and the resulting N/4 samples supplied to the output as bandpass wavelet S₂. The other N/2 samples from lowpass filter 42B are downsampled by downsampler 43B and the resulting N/4 samples are supplied to the third stage C, in which highpass filter 40C and downsampler 41C process them in like manner to provide at the output N/8 samples as bandpass wavelet S₁. The other N/4 samples from lowpass filter 42C are downsampled by downsampler 43C to give N/8 samples and supplies them to the output as low-pass wavelet S₀.

It should be noted that, if the input signal segment comprises, for example, 1024 samples or data points, wavelets S₀ and S₁ comprise only 128 samples, wavelet S₂ comprises 256 samples and wavelet S₃ comprises 512 samples.

Instead of the octave-band structure of Figure 24, a set of one lowpass, two bandpass filters and one highpass filter could be used, in parallel, with different downsampling rates.

It should be appreciated that, where the analysis filter bank 21 implements DWT, the synthesis filter 33 will implement inverse DWT. The corresponding synthesis filter bank for implementing Inverse Discrete Wavelet Transform is shown in Figure 25 but will not be described in detail since its operation will be apparent to one skilled in this art.

In each of the above-described embodiments, it is not essential for upsampling rate P to be equal to the downsampling rate M used in the analysis filter bank 21. Using an upsampling rate P which is less than downsampling rate M could reduce the output sampling frequency F₀ and hence the complexity of the D-to-A converter.

An advantage of embodiments of the present invention is that the encoded signal may be passband or baseband, enabling selection of a particular transmission band according to the particular application.

It should be appreciated that the signal source 10 and the encoder 12 could be parts of a transmitter 11 having other signal processing circuitry. Likewise, the decoder 17 and signal destination 19 could be parts of a corresponding receiver 18.

### INDUSTRIAL APPLICABILITY

It should be noted that the present invention is not limited to transmission systems but could be used for other purposes to maintain signal integrity despite noise and attenuation. For example, it might be used in recording of the signal on a compact disc or other storage medium. The storage medium can therefore be equated with the transmission medium 13 in Figure 1. It should be appreciated that the encoders and decoders described herein would probably be implemented by a suitably programmed digital signal processor or as a custom integrated circuit.

Embodiments of the present invention advantageously simplify the circuitry required to modulate the input digital signal and improve the tolerance of transmitted/stored signal to impulse noise.

## Claims

1. Apparatus comprising an encoder (12) for encoding a digital input signal for transmission or storage and a decoder (17) for decoding such encoded signal to reconstruct the input signal, the encoder comprising analysis filter bank means (21) for analyzing the input signal into a plurality of subband signals, each subband centered at a respective one of a corresponding plurality of frequencies, interpolation means (22;62) for upsampling and interpolating each subband signal to provide a plurality of interpolated subband signals all occupying the same frequency band; and combining means (23;60;74) for combining the interpolated subband signals to form the encoded signal for transmission or storage; and the decoder comprising synthesis filter bank means (33) complementary to said analysis filter bank means for producing a decoded signal corresponding to a reconstruction of the input signal, extraction means (31;71;81) for extracting the interpolated subband signals from the received encoded signal; and decimator means (32;70) for decimating each of the plurality of extracted interpolated subband signals to remove a number of samples corresponding to those interpolated during encoding and applying the decimated signals to the synthesis filter bank means (33), the synthesis filter bank means processing the plurality of decimated signals to reconstruct said input signal, **characterized in that,** in the encoder, the combining means (23;60;74) so combines the plurality of interpolated subband signals within the encoded signal that said interpolated subband signals occupy the same frequency band and the decoder separates the interpolated subband signals from within said same frequency band.

2. Apparatus as claimed in claim 1, **characterized in that** the combining means comprises modulation means (74) for using a pair of said interpolated subband signals each to provide a respective one of a first modulated signal and a second modulated signal, the first modulated signal and the second modulated signal having the same frequency but phase displaced by 90 degrees one relative to the other, and combining the modulated signals to provide said encoded signal, said encoded signal having two spectral lobes each comprising information from both of the subband signals;
and the decoder comprises demodulation means for orthogonally demodulating the subband signals extracted from the received encoded signal.

3. Apparatus as claimed in claim 2, **characterized in that** the modulation means (74) comprises quadrature amplitude modulation means for using each of the interpolated subband signals to modulate a respective one of an in-phase carrier signal and a quadrature carrier signal, the in-phase carrier signal and the quadrature carrier signal having the same frequency but phase-displaced by 90 degrees one relative to the other, and the demodulation means (81) comprises means for demodulating the received encoded signal using in-phase and quadrature carrier signals having the same frequency as those used to encode the encoded signal.

4. Apparatus as claimed in claim 1, **characterized in that** the analysis filter bank (21) generates a plurality of pairs of subband signals and the combining means selects fewer than all of said pairs, the synthesis filter bank (33) compensating for the unused subband signals by substituting zero level signals.

5. Apparatus as claimed in claim 2 or 3, further **characterized by** means (79) for removing one of said spectral lobes from the encoded signal and providing the remaining one of said spectral lobes as said encoded signal.

6. Apparatus as claimed in claim 1, **characterized in that**, in the encoder, the combining means comprises multiplexing means for time division multiplexing (60) the interpolated subband signals to form said encoded signal, and the extracting means comprises demultiplexing means (71) for time-division demultiplexing the received signal to provide a plurality of received interpolated subband signals corresponding to said interpolated signals in the encoder.

7. Apparatus as claimed in claim 1, **characterized in that** the encoder comprises means (60) for time-division multiplexing the subband signals and the interpolation means (62) upsamples and interpolates the multiplexed subband signals to form the interpolated subband signals, and, in the decoder, the decimator means (70) downsamples the received signal and the decoder further comprises demultiplexing means (71) for time-division demultiplexing the downsampled received signal to extract the subband signals.

8. Apparatus as claimed in claim 6 or 7, **characterized in that** the upsampling means upsamples at a rate (P) that corresponds to the number of subbands (N) created by the analysis filter bank means.

9. Apparatus as claimed in claim 6, 7 or 8, **characterized in that** the means (60) for time division multiplexing the subband signals comprises delay means (DB₀, DB₁, ...) for storing a series of values of each subband signal, the delay means being operable alternately between a first state wherein the delay means accepts values of the subband signals in parallel and a second state wherein the delay means outputs previously stored values serially.

10. Apparatus as claimed in claim 6, 7 or 8, **characterized in that** in the encoder, the means (60) for time division multiplexing the subband signals comprises first delay means (60A) and second delay means (60B) each for accepting a series of values of each subband signal, each delay means being operable alternately between a first state wherein the delay means accepts values of the subband signals in parallel and a second state wherein the delay means outputs previously stored values serially, the arrangement being such that, when the first delay means is in its first state accepting values of the subband signals, the second delay means is in its second state and outputting the subband signal values previously stored therein, and, in the decoder, the means (71) for time division demultiplexing the subband signals comprises first delay means (71A) and second delay means (71B) each for accepting a series of values of the received signal, each delay means being operable alternately between a first state wherein the delay means accepts values of the received signal serially and a second state where the delay means output previously stored values in parallel, the arrangement being such that, when the first delay means is in its first state accepting values of the received signal, the second delay means is in its second state and outputting the subband signal values previously stored therein.

11. An encoder (12) for encoding a digital input signal (I) for transmission or storage comprising analysis filter bank means (21) for analyzing the input signal (I) into a plurality of subband signals, each subband centered at a respective one of a corresponding plurality of frequencies, interpolation means (22) for upsampling and interpolating each subband signal to provide a plurality of interpolated subband signals all occupying the same frequency band; and combining means (23;60;74) for combining the interpolated subband signals to form the encoded signal for transmission or storage, **characterized in that** the combining means (23;60;74) so combines the plurality of interpolated subband signals within the encoded signal that said interpolated subband signals occupy the same frequency band.

12. An encoder as claimed in claim 11, **characterized in that** the combining means comprises modulation means (74) for using a pair of said interpolated subband signals each to provide a respective one of a first modulated signal and a second modulated signal, the first modulated signal and the second modulated signal having the same frequency but phase displaced by 90 degrees one relative to the other, and combining the modulated signals to provide said encoded signal, said encoded signal having two spectral lobes, each comprising information from both of the interpolated subband signals.

13. An encoder as claimed in claim 12, **characterized in that** the modulation means (74) comprises quadrature amplitude modulation means for using each of the interpolated subband signals to modulate a respective one of an in-phase carrier signal (f_{I}) and a quadrature carrier signal (f₀), the in-phase carrier signal and the quadrature carrier signal having the same frequency (f₀) but phase-displaced by 90 degrees one relative to the other.

14. An encoder as claimed in claim 11, **characterized in that** the analysis filter bank means (21) generates a plurality of pairs of subband signals and the modulation means (74) modulates a selection of said pairs.

15. An encoder as claimed in any one of claims 11 to 14, further **characterized by** means (79) for removing one of said spectral lobes from the encoded signal and providing the remaining one of said spectral lobes as said encoded signal.

16. An encoder as claimed in claim 11, **characterized in that** the combining means comprises multiplexing means (60) for time division multiplexing the interpolated subband signals to form said encoded signal.

17. An encoder as claimed in claim 15, **characterized by** means (60) for time-division multiplexing the subband signals and the interpolation means upsamples and interpolates the multiplexed subband signals to form the interpolated subband signals.

18. An encoder as claimed in claim 15, 16 or 17, **characterized in that** the interpolation means upsamples at a rate (P) dependent upon the number of subbands (N) created by the analysis filter bank means.

19. An encoder as claimed in claim 15, 16 or 17, **characterized in that** the means (60) for time division multiplexing the subband signals comprises delay means (DB₀, DB₁, ...) for storing a series of values of each subband signal, the delay means being operable alternately between a first state wherein the delay means accepts values of the subband signals in parallel and a second state wherein the delay means outputs previously stored values serially.

20. An encoder as claimed in claim 15, 16 or 17, **characterized in that** the means (60) for time division multiplexing the subband signals comprises first delay means (60A) and second delay means (60B) each for accepting a series of values of each subband signal, each delay means being operable alternately between a first state wherein the delay means accepts values of the subband signals in parallel and a second state wherein the delay means outputs previously stored values serially, the arrangement being such that, when the first delay means is in its first state accepting values of the subband signals, the second delay means is in its second state and outputting the subband signal values previously stored therein.

21. A decoder for decoding digital signals from an encoder as claimed in claim 11, comprising:
(i) means (31) for extracting from the same frequency band said plurality of interpolated subband signals in the received encoded signal; and
(ii) synthesis filter bank (33) complementary and substantially inverse to the analysis filter means used in encoding the received signal for processing the extracted pair of interpolated subband signals to produce a decoded signal (I') corresponding to the input signal (I).

22. A decoder as claimed in claim 21, for decoding an encoded signal encoded by the encoder of claim 12 and further **characterized by** demodulation means (81) for orthogonally demodulating the received signal to extract the subband signals from the received signal.

23. A decoder as claimed in claim 22, for decoding an encoded signal encoded by the encoder of claim 13, and **characterized in that** the demodulation means (81) comprises means for quadrature amplitude demodulating the received encoded signal using in-phase and quadrature carrier signals having the same frequency as those used to encode the encoded signal.

24. A decoder as claimed in claim 22, for decoding an encoded signal encoded by the encoder of claim 14, and **characterized in that** the synthesis filter bank (33) is arranged to compensate for the unused subband signals by substituting zero level signals.

25. A decoder as claimed in claim 21, **characterized in that** the extracting means comprises demultiplexing means (71) for time-division demultiplexing the downsampled signal to provide a plurality of received interpolated signals corresponding to said interpolated signals in the encoder.

26. A decoder as claimed in claim 25, **characterized in that** a decimator (70) downsamples the received signal and the decoder further comprises demultiplexing means (71) for time-division demultiplexing the downsampled received signal to extract the subband signals.

27. A decoder as claimed in claim 25 or 26, **characterized in that** a decoder input means downsamples at a rate (P) corresponding to the upsampling rate (P) used by the encoder to upsample the subband signals.

28. A decoder as claimed in claim 25, 26 or 27, **characterized in that** the means (71) for demultiplexing the received signal to extract the subband signals comprises delay means (DB₀, DB₁, ...) for storing a series of values of said received signal, the delay means being operable alternately between a first state wherein the delay means accepts values of the received signal serially and a second state wherein the delay means outputs previously stored values in parallel as said subband signals.

29. A decoder as claimed in claim 25, 26 or 27, **characterized in that** the means (71) for time division demultiplexing the subband signals comprises first delay means (DB'₀) and second delay means (DB'₁) each for accepting a series of values of the received signal, each delay means being operable alternately between a first state wherein the delay means accepts values of the received signal serially and a second state wherein the delay means outputs previously stored values in parallel, the arrangement being such that, when the first delay means is in its first state accepting values of the received signal, the second delay means is in its second state and outputting the subband signal values previously stored therein.

30. A method of encoding a digital input signal for transmission or storage and decoding such encoded signal to reconstruct the input signal, the encoding including the steps of:
(i) using an analysis filter bank means (21) for analyzing the input signal (I) into a plurality of subband signals (S₀ ... S_{N-1}), each subband centered at a respective one of a corresponding plurality of frequencies;
(ii) upsampling and interpolating each subband signal to provide a plurality of interpolated subband signals each occupying the same frequency band as the others; and
(iii) combining the interpolated subband signals to form the encoded signal (E₀) for transmission or storage;
the decoding comprising the steps of:
(iv) extracting the interpolated subband signals from the received encoded signal;
(v) decimating each of the plurality of extracted interpolated subband signals to remove an equivalent number of samples to the interpolated values; and
(vi) using synthesis filter bank means (33) complementary to said analysis filter bank means (21), processing the plurality of decimated subband signals to reconstruct said input signal, **characterized in that,** during encoding, the plurality of interpolated subband signals are so combined within the encoded signal that said interpolated subband signals occupy the same frequency band.

31. A method as claimed in claim 30, **characterized in that** the combining step uses a pair of interpolated signals each to provide a respective one of a first modulated signal and a second modulated signal, the first modulated signal and the second modulated signal having the same frequency but phase-displaced by 90 degrees one relative to the other, and combines the modulated signals to provide said encoded signal (E₀), said encoded signal having two spectral lobes each comprising information from both of the interpolated signals, and the decoder extracts the modulated signals from the received encoded signal and demodulates the extracted modulated signals to produce the received interpolated signals.

32. A method as claimed in claim 31, **characterized in that** the modulation comprises quadrature amplitude modulation (QAM) using each of the interpolated subband signals to modulate a respective one of an in-phase carrier signal (f_{I}) and a quadrature carrier signal (f_{Q}), the in-phase carrier signal and the quadrature carrier signal having the same frequency but phase-displaced by 90 degrees one relative to the other, and the demodulation step at the decoder comprises the step of quadrature amplitude demodulating the received encoded signal using in-phase and quadrature carrier signals having the same frequency as those used to encode the encoded signal.

33. A method as claimed in claim 30, **characterized in that** a plurality of pairs of subband signals (S₀,S₁,S₂,S₃) are generated but only a selection (S₀,S₁) of said pairs are modulated, and the processing by the synthesis filter means compensates for the unused subband signals by substituting zero level signals.

34. A method as claimed in claim 31 or 32, further **characterized by** the step of removing one of said spectral lobes from the encoded signal.

35. A method as claimed in claim 30, **characterized in that** the interpolated signals are combined using time-division multiplexing and the extracting step time-division demultiplexes the received signal to extract the received interpolated signals.

36. A method as claimed in claim 35, **characterized in that** the step of upsampling during encoding is applied to the multiplexed interpolated signals and the step of downsampling during decoding is applied to the received signal before demultiplexing.

37. A method as claimed in claim 35 or 36, **characterized in that** the upsampling during encoding is at a rate corresponding to the number of subbands created by the analysis filter bank means.

38. A method as claimed in claim 35, 36 or 37, **characterized in that** the time division multiplexing of the interpolated signals comprises the steps of alternately storing a series of values of each subband signal, in parallel, in delay means (DB₀, DB₁, ...) and outputting serially from the delay means values previously stored therein, and the demultiplexing of the received signal to extract the subband signals comprises the steps of alternately storing a series of values of said received signal serially in delay means (DB'₀, DB'₁, ...) and outputting previously stored values in parallel as said subband signals.

39. A method as claimed in claim 35, 36 or 37, **characterized in that** the step of multiplexing the subband signals uses first delay means (60a) and second delay means (60b) each for accepting a series of values of each subband signal, each delay means being alternately loaded with values of the subband signals in parallel and outputting previously stored values serially, the arrangement being such that, during the step of loading each of the delay means with values of the subband signals, the other delay means is outputting the subband signal values previously stored therein, and the step of time division demultiplexing of the subband signals uses first delay means (71A) and second delay means (71B) each for accepting a series of values of the received signal, each delay means being alternately loaded with values of the received signal serially and outputting previously stored values in parallel, the arrangement being such that, when each of the delay means is being loaded with values of the received signal, the other of the delay means is outputting the subband signal values previously stored therein.

40. A method of encoding a digital input signal for transmission or storage comprising the steps of:
(i) using an analysis filter bank means (21), analyzing the input signal into a plurality of subband signals, each subband centered at a respective one of a corresponding plurality of frequencies;
(ii) upsampling and interpolating each subband signal to provide a plurality of interpolated signals each occupying the same frequency band as the others; and
(iii) combining the interpolated subband signals to form the encoded signal for transmission or storage, **characterized in that** the plurality of subband signals are so combined within the encoded signal that said interpolated subband signals occupy the same frequency band.

41. An encoding method as claimed in claim 40, **characterized in that** the combining step uses said pair of interpolated subband signals each to provide a respective one of a first modulated signal and a second modulated signal, the first modulated signal and the second modulated signal having the same frequency but phase displaced by 90 degrees one relative to the other, and combines the modulated signals to provide said encoded signal, such that the encoded signal has two spectral lobes, each comprising information from both of the interpolated subband signals.

42. An encoding method as claimed in claim 41, **characterized in that** the combining step uses each of the interpolated subband signals for quadrature amplitude modulation of a respective one of an in-phase carrier signal (f_{I}) and a quadrature carrier signal (f_{Q}), the in-phase carrier signal and the quadrature carrier signal having the same frequency but phase-displaced by 90 degrees one relative to the other.

43. An encoding method as claimed in claim 40, **characterized in that** a plurality of pairs of subband signals (S₀,S₁,S₂,S₃) are generated using the analysis filter means but only a selection (S₀,S₁) of said pairs are modulated.

44. An encoding method as claimed in claim 41, 42 or 43, further **characterized by** the step of removing one of said spectral lobes from the encoded signal.

45. An encoding method as claimed in claim 40, **characterized in that** the interpolated subband signals are combined using time-division multiplexing.

46. An encoding method as claimed in claim 45, **characterized in that** the upsampling is performed after the step of multiplexing the subband signals.

47. An encoding method as claimed in claim 45 or 46, **characterized in that** the upsampling is at a rate (P) corresponding to the number of subbands (N) provided by the analysis filter bank means.

48. An encoding method as claimed in claim 45, 46 or 47, **characterized in that** the multiplexing of the subband signals uses delay means (DB₀, DB₁, ...) for storing a series of values of each subband signal, the values being stored in the delay means in parallel and, alternately, previously stored values outputted from the delay means serially.

49. An encoding method as claimed in claim 45, 46 or 47, **characterized in that** the step of multiplexing the subband signals uses first delay means (60A) and second delay means (60B) each for accepting a series of values of each subband signal, each delay means being loaded with values of the subband signals in parallel and, alternately, outputting previously stored values serially, the arrangement being such that, during loading of each of the delay means with values of the subband signals, the other delay means is outputting the subband signal values previously stored therein.

50. A method of decoding an encoded signal encoded by the encoder method of claim 40, comprising the steps of:
(iii) extracting said pair of interpolated signals from the same frequency band and from a received encoded signal (E'₀); and
(iv) using synthesis filter bank means (33) complementary and substantially inverse to the analysis filter bank means used during encoding, to process the extracted pair of received interpolated signals to produce a decoded signal (I') corresponding to the input signal (I).

51. A decoding method as claimed in claim 50, for decoding an encoded signal encoded by the encoding method of claim 41 and further **characterized by** the step of orthogonally demodulating the received signal to extract the interpolated signals.

52. A decoding method as claimed in claim 51, for decoding an encoded signal encoded by the encoding method of claim 42, **characterized in that** the demodulating of the received encoded signal comprises quadrature amplitude demodulation using in-phase and quadrature carrier signals having the same frequency as those used to encode the encoded signal.

53. A decoding method as claimed in claim 50, for decoding an encoded signal encoded by the encoder of claim 43, and **characterized in that** the processing using the synthesis filter bank means is arranged to compensate for unused subband signals by substituting zero level signals.

54. A method as claimed in claim 50, **characterized in that** the interpolated signals are combined using time-division multiplexing.

55. A decoding method as claimed in claim 54, **characterized in that** the received encoded signal is downsampled before demultiplexing.

56. A decoding method as claimed in claim 54 or 55, **characterized in that** the downsampling is at a rate (P) corresponding to the upsampling rate (P) used during encoding.

57. A decoding method as claimed in claim 54, 55 or 56, **characterized in that** the step of demultiplexing the received signal to extract the interpolated signals comprises the steps of alternately storing a series of values of said received signal serially in delay means (DB'₀, DB'₁ ...) and outputting previously stored values in parallel as said interpolated signals.

58. A decoding method as claimed in claim 54, 55 or 56, **characterized in that** the step of demultiplexing the interpolated signals uses first delay means (71A) and second delay means (71B) each for accepting a series of values of the received signal, each delay means having values of the received signal loaded therein serially and, alternately, outputting previously stored values in parallel, the arrangement being such that, when the values of the received signal are being loaded into one of the delay means, the interpolated signal values previously stored in the other delay means are being outputted.

## Patentansprüche

1. Vorrichtung mit einem Codierer (12) zum Codieren eines digitalen Eingangssignals zur Übertragung oder zur Speicherung und einem Decodierer (17) zum Decodieren eines solchen codierten Signals, um das Eingangssignal wiederherzustellen, wobei der Codierer eine Analyse-Filterbankeinrichtung (21) zum Analysieren des Eingangssignals in eine Vielzahl von Unterbandsignalen aufweist, wobei jedes Unterband bei einer jeweiligen einer entsprechenden Vielzahl von Frequenzen zentriert ist, eine Interpolationseinrichtung (22; 62) zum Aufwärtsabtasten und zum Interpolieren jedes Unterbandsignals, um eine Vielzahl von interpolierten Unterbandsignalen zur Verfügung zu stellen, die alle dasselbe Frequenzband besetzen; und eine Kombinationseinrichtung (23; 60; 74) zum Kombinieren der interpolierten Unterbandsignale, um das codierte Signal zur Übertragung oder zur Speicherung zu bilden; und wobei der Decodierer eine Synthese-Filterbankeinrichtung (33) aufweist, die komplementär zur Analyse-Filterbandeinrichtung ist, zum Erzeugen eines decodierten Signals entsprechend einer Wiederherstellung des Eingangssignals, eine Extraktionseinrichtung (31; 71; 81) zum Extrahieren der interpolierten Unterbandsignale aus dem empfangenen codierten Signal; und eine Dezimiereinrichtung (32; 70) zum Dezimieren jedes der Vielzahl von extrahierten, interpolierten Unterbandsignalen, um eine Anzahl von Abtastungen entsprechend denjenigen zu entfernen, die während eines Codierens interpoliert sind, und Anlegen der dezimierten Signale an die Synthese-Filterbankeinrichtung (33), wobei die Synthese-Filterbankeinrichtung die Vielzahl von dezimierten Signalen verarbeitet, um das Eingangssignal wiederherzustellen bzw. zu rekonstruieren, **dadurch gekennzeichnet, dass** im Codierer die Kombinationseinrichtung (2; 60; 74) die Vielzahl von interpolierten Unterbandsignalen innerhalb des codierten Signals so kombiniert, dass die interpolierten Unterbandsignale dasselbe Frequenzband besetzen und der Decodierer die unterpolierten Unterbandsignale von innerhalb demselben Frequenzband separiert.

2. Vorrichtung nach Anspruch 1, **dadurch gekennzeichnet, dass** die Kombinationseinrichtung eine Modulationseinrichtung (74) zum Verwenden eines Paars der interpolierten Unterbandsignale aufweist, und zwar jeweils zum Bereitstellen eines jeweiligen eines ersten modulierten Signals und eines zweiten modulierten Signals, wobei das erste modulierte Signal und das zweite modulierte Signal dieselbe Frequenz haben, aber relativ zueinander um 90 Grad phasenversetzt sind, und zum Kombinieren der modulierten Signale, um das codierte Signal bereitzustellen, wobei das codierte Signal zwei spektrale Keulen hat, die jeweils Information von beiden der Unterbandsignale aufweisen;
und der Decodierer eine Demodulationseinrichtung zum orthogonalen Demodulieren der aus dem empfangenen, codierten Signal extrahierten Unterbandsignale aufweist.

3. Vorrichtung nach Anspruch 2, **dadurch gekennzeichnet, dass** die Modulationseinrichtung (74) eine Quadraturamplitudenmodulationseinrichtung zum Verwenden jedes der interpolierten Unterbandsignale aufweist, um ein jeweiliges eines Gleichphasen-Trägersignals und eines Quadratur-Trägersignals zu modulieren, wobei das Gleichphasen-Trägersignal und das Quadratur-Trägersignal dieselbe Frequenz haben, aber relativ zueinander um 90 Grad phasenversetzt sind, und die Demodulationseinrichtung (81) eine Einrichtung zum Demodulieren des empfangenen, codierten Signals unter Verwendung von Gleichphasen- und Quadratur-Trägersignalen mit derselben Frequenz wie diejenigen, die zum Codieren des codierten Signals verwendet werden, aufweist.

4. Vorrichtung nach Anspruch 1, **dadurch gekennzeichnet, dass** die Analyse-Filterbank (21) eine Vielzahl von Paaren von Unterbandsignalen erzeugt und die Kombinationseinrichtung weniger als alle der Paare auswählt, wobei die Synthese-Filterbank (33) die nicht verwendeten Unterbandsignale durch Einsetzen von Nullpegelsignalen kompensiert. '

5. Vorrichtung nach Anspruch 2 oder 3, die weiterhin **gekennzeichnet ist durch** eine Einrichtung (79) zum Entfernen einer der spektralen Keulen vom codierten Signal und zum Bereitstellen der übrigen der spektralen Keulen als das codierte Signal.

6. Vorrichtung nach Anspruch 1, **dadurch gekennzeichnet, dass** im Codierer die Kombinationseinrichtung eine Multiplexeinrichtung zum Zeitmultiplexen (60) der interpolierten Unterbandsignale aufweist, um das codierte Signal zu bilden, und die Extraktiomseinrichtung eine Demultiplexeinrichtung (71) zum Zeitdemultiplexen des empfangenen Signals aufweist, um eine Vielzahl von empfangenen, interpolierten Unterbandsignalen entsprechend den interpolierten Signalen im Codierer bereitzustellen.

7. Vorrichtung nach Anspruch 1, **dadurch gekennzeichnet, dass** der Codierer eine Einrichtung (60) zum Zeitmultiplexen der Unterbandsignale aufweist, und die Interpolationseinrichtung (62) die multiplexten Unterbandsignale aufwärts abtastet und interpoliert, um die interpolierten Unterbandsignale zu bilden, und im Decodierer die Dezimiereinrichtung (70) das empfangene Signal abwärts abtastet, und der Decodierer weiterhin eine Demultiplexeinrichtung (71) zum Zeitdemultiplexen des abwärts abgetasteten, empfangenen Signals aufweist, um die Unterbandsignale zu extrahieren.

8. Vorrichtung nach Anspruch 6 oder 7, **dadurch gekennzeichnet, dass** die Aufwärtsabtasteinrichtung mit einer Rate (P) aufwärts abtastet, die der Anzahl von Unterbändem (N) entspricht, die durch die Analyse-Filterbankeinrichtung erzeugt werden.

9. Vorrichtung nach Anspruch 6, 7 oder 8, **dadurch gekennzeichnet, dass** die Einrichtung (60) zum Zeitmultiplexen der Unterbandsignale eine Verzögerungseinrichtung (DB₀, DB₁, ...) zum Speichern einer Reihe von Werten von jedem Unterbandsignal aufweist, wobei die Verzögerungseinrichtung abwechselnd zwischen einem ersten Zustand, in welchem die Verzögerungseinrichtung Werte der Unterbandsignale parallel annimmt, und einem zweiten Zustand, in welchem die Verzögerungseinrichtung zuvor gespeicherte Werte seriell ausgibt, betreibbar ist.

10. Vorrichtung nach Anspruch 6, 7 oder 8, **dadurch gekennzeichnet, dass** im Codierer die Einrichtung (60) zum Zeitmultiplexen der Unterbandsignale eine erste Verzögerungseinrichtung (60A) und eine zweite Verzögerungseinrichtung (60B) aufweist, die jeweils zum Annehmen einer Reihe von Werten von jedem Unterbandsignal dienen, wobei jede Verzögerungseinrichtung abwechselnd zwischen einem ersten Zustand, in welchem die Verzögerungseinrichtung Werte der Unterbandsignale parallel annimmt, und einem zweiten Zustand, in welchem die Verzögerungseinrichtung zuvor gespeicherte Werte seriell ausgibt, betreibbar ist, wobei der Aufbau so ist, dass dann, wenn die erste Verzögerungseinrichtung in ihrem ersten Zustand ist, in welchem Werte der Unterbandsignale angenommen werden, die zweite Verzögerungseinrichtung in ihrem zweiten Zustand ist, in welchem sie die zuvor darin gespeicherten Unterbandsignal-Werte ausgibt, und im Decodierer die Einrichtung (71) zum Zeitdemultiplexen der Unterbandsignale eine erste Verzögerungseinrichtung (71A) und eine zweite Verzögerungseinrichtung (71B) aufweist, die jeweils zum Annehmen einer Reihe von Werten des empfangenen Signals dienen, wobei jede Verzögerungseinrichtung abwechselnd zwischen einem ersten Zustand, in welchem die Verzögerungseinrichtung Werte des empfangenen Signals seriell annimmt, und einem zweiten Zustand, in welchem die Verzögerungseinrichtung zuvor gespeicherte Werte parallel ausgibt, betreibbar ist, wobei der Aufbau so ist, dass dann, wenn die erste Verzögerungseinrichtung in ihrem ersten Zustand ist, in welchem Werte des empfangenen Signals angenommen werden, die zweite Verzögerungseinrichtung in ihrem zweiten Zustand ist, in welchem die zuvor darin gespeicherten Unterbandsignal-Werte ausgegeben werden.

11. Codierer (12) zum Codieren eines digitalen Eingangssignals (I) zur Übertragung oder zur Speicherung mit einer Analyse-Filterbankeinrichtung (21) zum Analysieren des Eingangssignals (I) in eine Vielzahl von Unterbandsignalen, wobei jedes Unterband bei einer jeweiligen einer entsprechenden Vielzahl von Frequenzen zentriert ist, einer Interpolationseinrichtung (22) zum Aufwärtsabtasten und Interpolieren jedes Unterbandsignals, um eine Vielzahl von interpolierten Unterbandsignalen zur Verfügung zu stellen, die alle dasselbe Frequenzband besetzen; und einer Kombinationseinrichtung (23; 60; 74) zum Kombinieren der interpolierten Unterbandsignale, um das codierte Signal zur Übertragung oder zur Speicherung zu bilden, **dadurch gekennzeichnet, dass** die Kombinationseinrichtung (23; 60; 74) die Vielzahl von interpolierten Unterbandsignalen innerhalb des codierten Signals so kombiniert, dass die interpolierten Unterbandsignale dasselbe Frequenzband besetzen.

12. Codierer nach Anspruch 11, **dadurch gekennzeichnet, dass** die Kombinationseinrichtung eine Modulationseinrichtung (74) zum Verwenden eines Paars der interpolierten Unterbandsignale aufweist, und zwar jeweils zum Bereitstellen eines jeweiligen eines ersten modulierten Signals und eines zweiten modulierten Signals, wobei das erste modulierte Signal und das zweite modulierte Signal dieselbe Frequenz haben, aber relativ zueinander um 90 Grad phasenversetzt sind, und zum Kombinieren der modulierten Signale, um das codierte Signal zur Verfügung zu stellen, wobei das codierte Signal zwei spektrale Keulen hat, die jeweils Information von beiden der interpolierten Unterbandsignale aufweisen.

13. Codierer nach Anspruch 12, **dadurch gekennzeichnet, dass** die Modulationseinrichtung (74) eine Quadraturamplitudenmodulationseinrichtung zum Verwenden jedes der interpolierten Unterbandsignale aufweist, um ein jeweiliges eines Gleichphasen-Trägersignals (f_{I}) und eines Quadratur-Trägesignals (f₀) zu modulieren, wobei das Gleichphasen-Trägersignal und das Quadratur-Trägersignal dieselbe Frequenz (f₀) haben, aber zueinander um 90 Grad phasenversetzt sind.

14. Codierer nach Anspruch 11, **dadurch gekennzeichnet, dass** die Analyse-Filterbankeinrichtung (21) eine Vielzahl von Paaren von Unterbandsignalen erzeugt und die Modulationseinrichtung (74) eine Auswahl der Paare moduliert.

15. Codierer nach einem der Ansprüche 11 bis 14, der weiterhin **gekennzeichnet ist durch** eine Einrichtung (79) zum Entfemen einer der spektralen Keulen vom codierten Signal und zum Bereitstellen der übrigen der spektralen Keulen als das codierte Signal.

16. Codierer nach Anspruch 11, **dadurch gekennzeichnet, dass** die Kombinationseinrichtung eine Multiplexeinrichtung (60) zum Zeitmultiplexen der interpolierten Unterbandsignale aufweist, um das codierte Signal zu bilden.

17. Codierer nach Anspruch 15, **gekennzeichnet durch** eine Einrichtung (60) zum Zeitmultiplexen der Unterbandsignale und wobei die Interpolationseinrichtung die multiplexten Unterbandsignale aufwärts abtastet und interpoliert, um die interpolierten Unterbandsignale zu bilden.

18. Codierer nach Anspruch 15, 16 oder 17, **dadurch gekennzeichnet, dass** die Interpolationseinrichtung bei einer Rate (P) aufwärts abtastet, die von der Anzahl von Unterbändem (N) abhängt, die durch die Analyse-Filterbankeinrichtung erzeugt werden.

19. Codierer nach Anspruch 15, 16 oder 17, **dadurch gekennzeichnet, dass** die Einrichtung (60) zum Zeitmultiplexen der Unterbandsignale eine Verzögerungseinrichtung (DB₀, DB₁, ...) zum Speichern einer Reihe von Werten von jedem Unterbandsignal aufweist, wobei die Verzögerungseinrichtung abwechselnd zwischen einem ersten Zustand, in welchem die Verzögerungseinrichtung Werte der Unterbandsignale parallel annimmt, und einem zweiten Zustand, in welchem die Verzögerungseinrichtung zuvor gespeicherte Werte seriell ausgibt, betreibbar ist.

20. Codierer nach Anspruch 15, 16 oder 17, **dadurch gekennzeichnet, dass** die Einrichtung (60) zum Zeitmultiplexen der Unterbandsignale eine erste Verzögerungseinrichtung (60A) und eine zweite Verzögerungseinrichtung (60B) aufweist, die jeweils zum Annehmen einer Reihe von Werten von jedem Unterbandsignal dient, wobei jede Verzögerungseinrichtung abwechselnd zwischen einem ersten Zustand, in welchem die Verzögerungseinrichtung Werte der Unterbandsignale parallel annimmt, und einem zweiten Zustand, in welchem die Verzögerungseinrichtung zuvor gespeicherte Werte seriell ausgibt, betreibbar ist, wobei der Aufbau derart ist, dass dann, wenn die erste Verzögerungseinrichtung in ihrem ersten Zustand ist, in welchem Werte der Unterbandsignale angenommen werden, die zweite Verzögerungseinrichtung in ihrem zweiten Zustand ist und die zuvor darin gespeicherte Unterbandsignal-Werte ausgibt.

21. Decodierer zum Decodieren digitaler Signale von einem Codierer nach Anspruch 11, mit:
(i) einer Einrichtung (31) zum Extrahieren der Vielzahl von interpolierten Unterbandsignalen im empfangenen codierten Signal aus demselben Frequenzband; und
(ii) einer Synthese-Filterbank (33), die komplementär und im Wesentlichen invers zur Analyse-Filtereinrichtung ist, die beim Codieren des empfangenen Signals verwendet wird, zum Verarbeiten des extrahierten Paars von interpolierten Unterbandsignalen, um ein decodiertes Signal (I') entsprechend dem Eingangssignal (I) zu erzeugen.

22. Decodierer nach Anspruch 21 zum Decodieren eines codierten Signals, das durch den Codierer nach Anspruch 12 codiert ist, und der weiterhin **gekennzeichnet ist durch** eine Demodulationseinrichtung (81) zum orthogonalen Demodulieren des empfangenen Signals, um die Unterbandsignale aus dem empfangenen Signal zu extrahieren.

23. Decodierer nach Anspruch 22 zum Decodieren eines codierten Signals, das durch den Codierer nach Anspruch 13 codiert ist, und der **dadurch gekennzeichnet, dass** die Demodulationseinrichtung (81) eine Einrichtung zur Quadraturamplitudendemodulation des empfangenen codierten Signals unter Verwendung von Gleichphasen- und Quadratur-Trägersignalen mit derselben Frequenz wie diejenigen, die zum Codieren des codierten Signals verwendet werden, aufweist.

24. Decodierer nach Anspruch 22 zum Decodieren eines codierten Signals, das durch den Codierer nach Anspruch 14 codiert ist, und der **dadurch gekennzeichnet, dass** die Synthese-Filterbank (33) eingerichtet ist, um die nicht verwendeten Unterbandsignale durch Einsetzen von Nullpegelsignalen zu kompensieren.

25. Decodierer nach Anspruch 21, **dadurch gekennzeichnet, dass** die Extraktionseinrichtung eine Demultiplexeinrichtung (71) zum Zeitdemultiplexen des abwärts abgetasteten Signals aufweist, um eine Vielzahl von empfangenen interpolierten Signalen entsprechend den interpolierten Signalen im Codierer zur Verfügung zu stellen.

26. Decodierer nach Anspruch 25, **dadurch gekennzeichnet, dass** ein Dezimierer (70) das empfangene Signal abwärts abtastet und der Decodierer weiterhin eine Demultiplexeinrichtung (71) zum Zeitdemultiplexen des abwärts abgetasteten empfangenen Signals aufweist, um die Unterbandsignale zu extrahieren.

27. Decodierer nach Anspruch 25 oder 26, **dadurch gekennzeichnet, dass** eine Decodierer-Eingangseinrichtung bei einer Rate (P) entsprechend der Aufwärtsabtastrate (P) abwärts abtastet, die durch den Codierer zum Aufwärtsabtasten der Unterbandsignale verwendet wird.

28. Decodierer nach Anspruch 25, 26 oder 27, **dadurch gekennzeichnet, dass** die Einrichtung (71) zum Demultiplexen der empfangenen Signals, um die Unterbandsignale zu extrahieren, eine Verzögerungseinrichtung (DB₀, DB₁, ...) zum Speichern einer Reihe von Werten des empfangenen Signals aufweist, wobei die Verzögerungseinrichtung abwechselnd zwischen einem ersten Zustand, in welchem die Verzögerungseinrichtung Werte des empfangenen Signals seriell annimmt, und einem zweiten Zustand, in welchem die Verzögerungseinrichtung zuvor gespeicherte Werte parallel als die Unterbandsignale ausgibt, betreibbar ist.

29. Decodierer nach Anspruch 25, 26 oder 27, **dadurch gekennzeichnet, dass** die Einrichtung (71) zum Zeitdemultiplexen der Unterbandsignale eine erste Verzögerungseinrichtung (DB'₀) und eine zweite Verzögerungseinrichtung (DB'₁) aufweist, die jeweils zum Annehmen einer Reihe von Werten des empfangenen Signals dienen, wobei jede Verzögerungseinrichtung abwechselnd zwischen einem ersten Zustand, in welchem die Verzögerungseinrichtung Werte des empfangenen Signals seriell annimmt, und einem zweiten Zustand, in welchem die Verzögerungseinrichtung zuvor gespeicherte Werte parallel ausgibt, betreibbar ist, wobei der Aufbau derart ist, dass dann, wenn die erste Verzögerungseinrichtung in ihrem ersten Zustand ist, in welchem Werte des empfangenen Signals angenommen werden, die zweite Verzögerungseinrichtung in ihrem zweiten Zustand ist und die zuvor darin gespeicherten Unterbandsignal-Werte ausgibt.

30. Verfahren zum Codieren eines digitalen Eingangssignals zur Übertragung oder zur Speicherung und zum Decodieren eines solchen codierten Signals, um das Eingangssignal wiederherzustellen, wobei das Codieren die folgenden Schritte enthält:
(i) Verwenden einer Analyse-Filterbankeinrichtung (21) zum Analysieren des Eingangssignals (I) in eine Vielzahl von Unterbandsignalen (S₀, ..., S_{N-1}), wobei jedes Unterband bei einer jeweiligen einer entsprechenden Vielzahl von Frequenzen zentriert ist;
(ii) Aufwärtsabtasten oder Interpolieren jedes Unterbandsignals, um eine Vielzahl von interpolierten Unterbandsignalen zur Verfügung zu stellen, die jeweils dasselbe Frequenzband wie die anderen besetzen; und
(iii) Kombinieren der interpolierten Unterbandsignale, um das codierte Signal (E₀) zur Übertragung oder zur Speicherung zu bilden;
wobei das Decodieren die folgenden Schritte aufweist:
(iv) Extrahieren der interpolierten Unterbandsignale aus dem empfangenen, codierten Signal;
(v) Dezimieren jedes der Vielzahl von extrahierten interpolierten Unterbandsignalen, um eine zu den interpolierten Werten äquivalente Anzahl von Abtastungen zu entfernen; und
(vi) Verwenden einer Synthese-Filterbankeinrichtung (33), die komplementär zur Analyse-Filterbankeinrichtung (21) ist, Verarbeiten der Vielzahl von dezimierten Unterbandsignalen, um das Eingangssignal wiederherzustellen, **dadurch gekennzeichnet, dass** während des Codierens die Vielzahl von interpolierten Unterbandsignalen innerhalb des codierten Signals so kombiniert wird, dass die interpolierten Unterbandsignale dasselbe Frequenzband besetzen.

31. Verfahren nach Anspruch 30, **dadurch gekennzeichnet, dass** der Kombinationsschritt ein Paar von interpolierten Signalen verwendet, um jeweils ein jeweiliges eines ersten modulierten Signals und eines zweiten modulierten Signals zur Verfügung zu stellen, wobei das erste modulierte Signal und das zweite modulierte Signal dieselbe Frequenz haben, aber relativ zueinander um 90 Grad phasenversetzt sind, und die modulierten Signale kombiniert, um das codierte Signal (E₀) zur Verfügung zu stellen, wobei das codierte Signal zwei spektrale Keulen hat, die jeweils Information von beiden der interpolierten Signale aufweisen, und der Decodierer die modulierten Signale aus dem empfangenen codierten Signal extrahiert und die extrahierten modulierten Signale demoduliert, um die empfangenen interpolierten Signale zu erzeugen.

32. Verfahren nach Anspruch 31, **dadurch gekennzeichnet, dass** die Modulation eine Quadraturamplitudenmodulation (QAM) aufweist, die jedes der interpolierten Unterbandsignale verwendet, um ein jeweiliges eines Gleichphasen-Trägersignals (f_{I}) und eines Qaudratur-Trägersignals (f_{Q}) zu modulieren, wobei das Gleichphasen-Trägersignal und das Quadratur-Trägersignal dieselbe Frequenz haben, aber relativ zueinander um 90 Grad phasenversetzt sind, und der Demodulationsschritt beim Decodierer den Schritt zum Quadraturamplitudendemodulieren des empfangenen codierten Signals unter Verwendung der Gleichphasen- und Quadratur-Trägersignale mit derselben Frequenz wie diejenigen aufweist, die zum Codieren des codierten Signals verwendet werden.

33. Verfahren nach Anspruch 30, **dadurch gekennzeichnet, dass** eine Vielzahl von Paaren von Unterbandsignalen (S₀, S₁, S₂, S₃) erzeugt wird, aber nur eine Auswahl (S₀, S₁) der Paare moduliert wird, und die Verarbeitung durch die Synthese-Filtereinrichtung die nicht verwendeten Unterbandsignale durch Einsetzen von Nullpegelsignalen kompensiert.

34. Verfahren nach Anspruch 31 oder 32, das weiterhin **gekennzeichnet ist durch** den Schritt zum Entfernen einer der spektralen Keulen aus dem codierten Signal.

35. Verfahren nach Anspruch 30, **dadurch gekennzeichnet, dass** die interpolierten Signale unter Verwendung eines Zeitmultiplexens kombiniert werden und der Extrahierschritt das empfangene Signal zeitdemultiplext, um die empfangenen interpolierten Signale zu extrahieren.

36. Verfahren nach Anspruch 35, **dadurch gekennzeichnet, dass** der Schritt zum Aufwärtsabtasten während eines Codierens auf die multiplexten interpolierten Signale angewendet wird und der Schritt zum Abwärtsabtasten während eines Decodierens auf das empfangene Signal vor einem Demultiplexen angewendet wird.

37. Verfahren nach Anspruch 35 oder 36, **dadurch gekennzeichnet, dass** das Aufwärtsabtasten während eines Codierens bei einer Rate entsprechend der Anzahl von Unterbändem erfolgt, die durch die Analyse-Filterbankeinrichtung erzeugt werden.

38. Verfahren nach Anspruch 35, 36 oder 37, **dadurch gekennzeichnet, dass** das Zeitmultiplexen der interpolierten Signale die Schritte zum abwechselnden parallelen Speichern einer Reihe von Werten jedes Unterbandsignals in einer Verzögerungseinrichtung (DB₀, DB₁, ...) und zum seriellen Ausgeben aus der Verzögerungseinrichtung von zuvor darin gespeicherten Werten aufweist, und das Demultiplexen des empfangenen Signals zum Extrahieren der Unterbandsignale die Schritte zum abwechselnden seriellen Speichern einer Reihe von Werten des empfangenen Signals in einer Verzögerungseinrichtung (DB'₀, DB'₁, ...) und zum Ausgeben zuvor gespeicherter Werte parallel als die Unterbandsignale aufweist.

39. Verfahren nach Anspruch 35, 36 oder 37, **dadurch gekennzeichnet, dass** der Schritt zum Multiplexen der Unterbandsignale eine erste Verzögerungseinrichtung (60a) und eine zweite Verzögerungseinrichtung (60b) verwendet, die jeweils zum Annehmen einer Reihe von Werten jedes Unterbandsignals dienen, wobei jede Verzögerungseinrichtung abwechselnd mit Werten der Unterbandsignale parallel geladen wird und zuvor gespeicherte Werte seriell ausgibt, wobei der Aufbau derart ist, dass während des Schritts zum Laden einer jeweiligen Verzögerungseinrichtung mit Werten der Unterbandsignale die andere Verzögerungseinrichtung die zuvor darin gespeicherten Unterbandsignal-Werte ausgibt, und der Schritt zum Zeitdemultiplexen der Unterbandsignale eine erste Verzögerungseinrichtung (71A) und eine zweite Verzögerungseinrichtung (71B) verwendet, die jeweils zum Annehmen einer Reihe von Werten des empfangenen Signals dienen, wobei jede Verzögerungseinrichtung abwechselnd mit Werten des empfangenen Signals seriell geladen wird und zuvor gespeicherte Werte parallel ausgibt, wobei der Aufbau derart ist, dass dann, wenn eine jeweilige der Verzögerungseinrichtungen mit Werten des empfangenen Signals geladen wird, die andere der Verzögerungseinrichtungen die zuvor darin gespeicherten Unterbandsignal-Werte ausgibt.

40. Verfahren zum Codieren eines digitalen Eingangssignals zur Übertragung oder zur Speicherung, welches Verfahren die folgenden Schritte aufweist:
(i) Verwenden einer Analyse-Filterbankeinrichtung (21), Analysieren des Eingangssignals in eine Vielzahl von Unterbandsignalen, wobei jedes Unterband bei einer jeweiligen einer entsprechenden Vielzahl von Frequenzen zentriert ist;
(ii) Aufwärtsabtasten und Interpolieren jedes Unterbandsignals, um eine Vielzahl von interpolierten Signalen zur Verfügung zu stellen, von welchem jedes dasselbe Frequenzband wie die anderen besetzt; und
(iii) Kombinieren der interpolierten Unterbandsignale, um das codierte Signal zur Übertragung oder zur Speicherung auszubilden, **dadurch gekennzeichnet, dass** die Vielzahl von Unterbandsignalen innerhalb des codierten Signals so kombiniert wird, dass die interpolierten Unterbandsignale dasselbe Frequenzband besetzen.

41. Codierverfahren nach Anspruch 40, **dadurch gekennzeichnet, dass** der Kombinationsschritt das Paar von interpolierten Unterbandsignalen verwendet, um jeweils ein jeweiliges eines ersten modulierten Signals und eines zweiten modulierten Signals zur Verfügung zu stellen, wobei das erste modulierte Signal und das zweite modulierte Signal dieselbe Frequenz haben, aber relativ zueinander um 90 Grad phasenversetzt sind, und die modulierten Signale kombiniert, um das codierte Signal zur Verfügung zu stellen, so dass das codierte Signal zwei spektrale Keulen hat, die jeweils Information von beiden der interpolierten Unterbandsignale aufweisen.

42. Codierverfahren nach Anspruch 41, **dadurch gekennzeichnet, dass** der Kombinationsschritt jedes der interpolierten Unterbandsignale zur Quadraturamplitudenmodulation eines jeweiligen eines Gleichphasen-Trägersignals (f_{I}) und eines Quadratur-Trägersignals (f_{Q}) verwendet, wobei das Gleichphasen-Trägersignal und das Quadratur-Trägersignal dieselbe Frequenz haben, aber relativ zueinander um 90 Grad phasenversetzt sind.

43. Codierverfahren nach Anspruch 40, **dadurch gekennzeichnet, dass** eine Vielzahl von Paaren von Unterbandsignalen (S₀, S₁, S₂, S₃) unter Verwendung der Analyse-Filtereinrichtung erzeugt wird, aber nur eine Auswahl (S₀, S₁) der Paare moduliert wird.

44. Codierverfahren nach Anspruch 41, 42 oder 43, das weiterhin **gekennzeichnet ist durch** den Schritt zum Entfernen einer der spektralen Keulen vom codierten Signal.

45. Codierverfahren nach Anspruch 40, **dadurch gekennzeichnet, dass** die interpolierten Unterbandsignale unter Verwendung eines Zeltmultiplexens kombiniert werden.

46. Codierverfahren nach Anspruch 45, **dadurch gekennzeichnet, dass** das Aufwärtsabtasten nach dem Schritt zum Multiplexen der Unterbandsignale durchgeführt wird.

47. Codierverfahren nach Anspruch 45 oder 46, **dadurch gekennzeichnet, dass** das Aufwärtsabtasten bei einer Rate (P) entsprechend der Anzahl von Unterbändern (N) erfolgt, die durch die Analyse-Filterbankeinrichtung zur Verfügung gestellt werden.

48. Codierverfahren nach Anspruch 45, 46 oder 47, **dadurch gekennzeichnet, dass** das Multiplexen der Unterbandsignale eine Verzögerungseinrichtung (DB₀, DB₁, ...) zum Speichern einer Reihe von Werten jedes Unterbandsignals verwendet, wobei abwechselnd die Werte in der Verzögerungseinrichtung parallel gespeichert werden und zuvor gespeicherte Werte von der Verzögerungseinrichtung seriell ausgegeben werden.

49. Codierverfahren nach Anspruch 45, 46 oder 47, **dadurch gekennzeichnet, dass** der Schritt zum Multiplexen der Unterbandsignale eine erste Verzögerungseinrichtung (60A) und eine zweite Verzögerungseinrichtung (60B) verwendet, die jeweils zum Annehmen einer Reihe von Werten jedes Unterbandsignals dienen, wobei abwechselnd jede Verzögerungseinrichtung mit Werten der Unterbandsignale parallel geladen wird und zuvor gespeicherte Werte seriell ausgibt, wobei der Aufbau derart ist, dass während eines Ladens einer jeweiligen der Verzögerungseinrichtungen mit Werten der Unterbandsignale die andere Verzögerungseinrichtung die zuvor darin gespeicherten Unterbandsignal-Werte ausgibt.

50. Verfahren zum Codieren eines codierten Signals, das durch das Codierverfahren nach Anspruch 40 codiert ist, welches Verfahren die folgenden Schritte aufweist:
(iii) Extrahieren des Paars von interpolierten Signalen aus demselben Frequenzband und aus einem empfangenen, codierten Signal (E'₀); und
(iv) Verwenden einer Synthese-Filterbankeinrichtung (33), die komplementär und im Wesentlichen invers zur Analyse-Filterbankeinrichtung ist, die während eines Codierens verwendet wird, zum Verarbeiten des extrahierten Paars von empfangenen interpolierten Signalen, um ein decodiertes Signal (I') entsprechend dem Eingangssignal (I) zu erzeugen.

51. Decodierverfahren nach Anspruch 50 zum Decodieren eines codierten Signals, das durch das Codierverfahren nach Anspruch 41 codiert ist, welches weiterhin **gekennzeichnet ist durch** den Schritt zum orthogonalen Demodulieren des empfangenen Signals, um die interpolierten Signale zu extrahieren.

52. Decodierverfahren nach Anspruch 51 zum Decodieren eines codierten Signals, das durch das Codierverfahren nach Anspruch 42 codiert ist, **dadurch gekennzeichnet, dass** das Demodulieren des empfangenen codierten Signals eine Quadraturamplitudendemodulation unter Verwendung von Gleichphasen- und Quadratur-Trägersignalen mit derselben Frequenz wie diejenigen aufweist, die zum Codieren des codierten Signals verwendet werden.

53. Decodierverfahren nach Anspruch 50 zum Decodieren eines codierten Signals, das durch das Codierverfahren nach Anspruch 43 codiert ist, **dadurch gekennzeichnet, dass** die Verarbeitung unter Verwendung der Synthese-Filterbankeinrichtung eingerichtet ist, um nicht verwendete Unterbandsignale durch Einsetzen von Nullpegelsignalen zu kompensieren.

54. Verfahren nach Anspruch 50, **dadurch gekennzeichnet, dass** die interpolierten Signale unter Verwendung eines Zeitmultiplexens kombiniert werden.

55. Decodierverfahren nach Anspruch 54, **dadurch gekennzeichnet, dass** das empfangene codierte Signal vor einem Demultiplexen abwärts abgetastet wird.

56. Decodierverfahren nach Anspruch 54 oder 55, **dadurch gekennzeichnet, dass** das Abwärtsabtasten bei einer Rate (P) entsprechend der Aufwärtsabtastrate (P) erfolgt, die während eines Codierens verwendet wird.

57. Decodierverfahren nach Anspruch 54, 55 oder 56, **dadurch gekennzeichnet, dass** der Schritt zum Demultiplexen des empfangenen Signals zum Extrahieren der interpolierten Signale die Schritte zum abwechselnden seriellen Speichern einer Reihe von Werten des empfangenen Signals in einer Verzögerungseinrichtung (DB'₀, DB'₁, ...) und zum parallelen Ausgeben zuvor gespeicherter Werte als die interpolierten Signale aufweist.

58. Decodierverfahren nach Anspruch 54, 55 oder 56, **dadurch gekennzeichnet, dass** der Schritt zum Demultiplexen der interpolierten Signale eine erste Verzögerungseinrichtung (71A) und eine zweite Verzögerungseinrichtung (71B) verwendet, die jeweils zum Annehmen einer Reihe von Werten des empfangenen Signals dienen, wobei jede Verzögerungseinrichtung Werte des empfangenen Signals seriell darin geladen hat und abwechselnd zuvor gespeicherte Werte parallel ausgibt, wobei der Aufbau derart ist, dass dann, wenn die Werte des empfangenen Signals in eine der Verzögerungseinrichtungen geladen werden, die in der anderen Verzögerungseinrichtung zuvor gespeicherten interpolierten Signalwerte ausgegeben werden.

## Revendications

1. Appareil comprenant un codeur (12) pour coder un signal d'entrée numérique pour transmission ou mémorisation, et un décodeur (17) pour décoder ce signal codé dans le but de reconstituer le signal d'entrée, le codeur comprenant un moyen de banc de filtres d'analyse (21) pour analyser le signal d'entrée et le décomposer en une pluralité de signaux de sous-bande, chaque sous-bande étant centrée sur une fréquence appartenant à une pluralité correspondante de fréquences, un moyen d'interpolation (22 ; 62) pour soumettre à un échantillonnage montant et interpoler chaque signal de sous-bande pour fournir une pluralité de signaux de sous-bande interpolés qui tous occupent la même bande de fréquences ; et un moyen de combinaison (23 ; 60 ; 74) pour combiner les signaux de sous-bande interpolés dans le but de former le signal codé pour transmission ou mémorisation ; et le décodeur comprenant un moyen de banc de filtres de synthèse (33) complémentaire dudit moyen de banc de filtres d'analyse pour produire un signal décodé correspondant à une reconstitution du signal d'entrée, un moyen d'extraction (31 ; 71 ; 81) pour extraire du signal codé reçu les signaux de sous-bande interpolés ; et un moyen décimateur (32 ; 70) pour décimer chacun de la pluralité de signaux de sous-bande interpolés extraits dans le but de retirer un certain nombre d'échantillons correspondant à ceux qui ont été interpolés pendant le codage, et pour appliquer les signaux décimés au moyen de banc de filtres de synthèse (33), le moyen de banc de filtres de synthèse traitant la pluralité des signaux décimés pour reconstituer ledit signal d'entrée, **caractérisé en ce que**, dans le codeur, le moyen de combinaison (23 ; 60 ; 74) combine la pluralité de signaux de sous-bande interpolés à l'intérieur du signal codé de façon que lesdits signaux de sous-bande interpolés occupent la même bande de fréquences et que le décodeur sépare de l'intérieur de ladite même bande de fréquences les signaux de sous-bande interpolés.

2. Appareil selon la revendication 1, **caractérisé en ce que** le moyen de combinaison comprend un moyen de modulation (74) pour utilisation d'une paire desdits signaux de sous-bande interpolés, l'un de ces derniers fournissant un premier signal modulé, et l'autre fournissant un deuxième signal modulé, le premier signal modulé et le deuxième signal modulé ayant la même fréquence mais étant déphasés de 90 degrés l'un par rapport à l'autre, et pour combinaison des signaux modulés, dans le but de fournir ledit signal codé, ledit signal codé possédant deux lobes spectraux, chacun comprenant des informations provenant des deux signaux de sous-bande ;
et le décodeur comprend un moyen de démodulation pour assurer la démodulation orthogonale des signaux de sous-bande extraits du signal codé reçu.

3. Appareil selon la revendication 2, **caractérisé en ce que** le moyen de modulation (74) comprend un moyen de modulation d'amplitude en quadrature pour utilisation de chacun des signaux de sous-bande interpolés, de façon que l'un d'eux module un signal porteur en phase et l'autre un signal porteur en quadrature, le signal porteur en phase et le signal porteur en quadrature ayant la même fréquence mais étant déphasés de 90 degrés l'un par rapport à l'autre, et le moyen de démodulation (81) comprend un moyen pour démoduler le signal codé reçu, par utilisation de signaux porteurs en phase et en quadrature ayant la même fréquence que ceux qui sont utilisés pour coder le signal codé.

4. Appareil selon la revendication 1, **caractérisé en ce que** le banc de filtres d'analyse (21) génère une pluralité de paires de signaux de sous-bande, et le moyen de combinaison sélectionne moins de la totalité desdites paires, le banc de filtres de synthèse (33) compensant les signaux de sous-bande non-utilisés en les remplaçant par des signaux au niveau zéro.

5. Appareil selon la revendication 2 ou 3, **caractérisé en outre par** un moyen (79) pour retirer l'un desdits lobes spectraux du signal codé, et fournir l'autre desdits lobes spectraux en tant que ledit signal codé.

6. Appareil selon la revendication 1, **caractérisé en ce que**, dans le codeur, le moyen de combinaison comprend un moyen de multiplexage pour multiplexer par répartition dans le temps (60) les signaux de sous-bande interpolés, dans le but de former ledit signal codé, et le moyen d'extraction comprend un moyen de démultiplexage (71) pour démultiplexer par répartition dans le temps le signal reçu, dans le but de fournir une pluralité de signaux de sous-bande interpolés reçus, correspondant auxdits signaux interpolés dans le codeur.

7. Appareil selon la revendication 1, **caractérisé en ce que** le codeur comprend un moyen (60) pour multiplexer par répartition dans le temps les signaux de sous-bande, et le moyen d'interpolation (62) assure l'échantillonnage montant des signaux de sous-bande multiplexés et les interpole, pour former les signaux de sous-bande interpolés, et, dans le décodeur, le moyen décimateur (70) assure l'échantillonnage descendant du signal reçu, et le décodeur comprend en outre un moyen de démultiplexage (71) pour démultiplexer par répartition dans le temps le signal reçu ayant subi un échantillonnage descendant, pour extraire les signaux de sous-bande.

8. Appareil selon la revendication 6 ou 7, **caractérisé en ce que** le moyen d'échantillonnage montant assure l'échantillonnage montant à une cadence (P) qui correspond au nombre de sous-bandes (N) créées par le moyen de banc de filtres d'analyse.

9. Appareil selon la revendication 6, 7 ou 8, **caractérisé en ce que** le moyen (60) destiné à multiplexer par répartition dans le temps les signaux de sous-bande comprend un moyen de temporisation (DB₀, DB₁, ...) pour mémoriser une série de valeurs de chaque signal de sous-bande, le moyen de temporisation pouvant être exploité en alternance entre un premier état dans lequel le moyen de temporisation accepte les valeurs des signaux de sous-bande en parallèle et un deuxième état dans lequel le moyen de temporisation émet les valeurs précédemment mémorisées en série.

10. Appareil selon la revendication 6, 7 ou 8, **caractérisé en ce que**, dans le codeur, le moyen (60) pour démultiplexer par répartition dans le temps les signaux de sous-bande comprend un premier moyen de temporisation (60A) et un deuxième moyen de temporisation (60B), chacun étant destiné à accepter une série de valeurs de chaque signal de sous-bande, chaque moyen de temporisation étant exploitable en alternance entre un premier état dans lequel le moyen de temporisation accepte des valeurs des signaux de sous-bande en parallèle et un deuxième état dans lequel le moyen de temporisation émet des valeurs précédemment mémorisées en série, l'arrangement étant tel que, quand le premier moyen de temporisation se trouve dans son premier état acceptant des valeurs des signaux de sous-bande, le deuxième moyen de temporisation se trouve dans son deuxième état, en émettant les valeurs de signaux de sous-bande qui y ont été précédemment mémorisés, et, dans le décodeur, le moyen (71) pour le démultiplexage par répartition dans le temps des signaux de sous-bande comprend un premier moyen de temporisation (71A) et un deuxième moyen de temporisation (71B), chacun permettant d'accepter une série de valeurs du signal reçu, chaque moyen de temporisation étant exploitable en alternance entre un premier état dans lequel le moyen de temporisation accepte des valeurs du signal reçu en série et un deuxième état dans lequel le moyen de temporisation émet des valeurs précédemment mémorisées en parallèle, l'arrangement étant tel que, quand le premier moyen de temporisation se trouve dans son premier état acceptant des valeurs du signal reçu, le deuxième moyen de temporisation se trouve dans son deuxième état et émet les valeurs du signal de sous-bande qui y ont été précédemment mémorisées.

11. Codeur (12) pour coder un signal d'entrée numérique (I) pour transmission ou mémorisation, comprenant un moyen (21) de banc de filtres d'analyse pour analyser le signal d'entrée (I) et le décomposer en une pluralité de signaux de sous-bande, chaque sous-bande étant centrée sur une fréquence appartenant à une pluralité correspondante de fréquences, un moyen d'interpolation (22) pour assurer l'échantillonnage montant de chaque signal de sous-bande et interpoler ce dernier pour fournir une pluralité de signaux de sous-bande interpolés qui tous occupent la même bande de fréquences ; et un moyen de combinaison (23 ; 60 ; 74) pour combiner les signaux de sous-bande interpolés dans le but de former le signal codé pour transmission ou mémorisation, **caractérisé en ce que** le moyen de combinaison (23 ; 60 ; 74) combine la pluralité de signaux de sous-bande interpolés à l'intérieur du signal codé de façon que lesdits signaux de sous-bande interpolés occupent la même bande de fréquences.

12. Codeur selon la revendication 11, **caractérisé en ce que** le moyen de combinaison comprend un moyen de modulation (74) pour utilisation d'une paire desdits signaux de sous-bande interpolés, dont l'un fournit un premier signal modulé et l'autre fournit un deuxième signal modulé, le premier signal modulé et le deuxième signal modulé ayant la même fréquence mais étant déphasés de 90 degrés l'un par rapport à l'autre, et pour combiner les signaux modulés dans le but de fournir ledit signal codé, ledit signal codé ayant deux lobes spectraux dont chacun comprend des informations provenant des deux signaux de sous-bande interpolés.

13. Codeur selon la revendication 12, **caractérisé en ce que** le moyen de modulation (74) comprend un moyen de modulation d'amplitude en quadrature pour utilisation de chacun des signaux de sous-bande interpolés, l'un d'eux modulant un signal porteur en phase (f_{I}) et un signal porteur en quadrature (f₀), le signal porteur en phase et le signal porteur en quadrature ayant la même fréquence (f₀) mais étant déphasés de 90 degrés l'un par rapport à l'autre.

14. Codeur selon la revendication 11, **caractérisé en ce que** le moyen de banc de filtres d'analyse (21) génère une pluralité de paires de signaux de sous-bande, et le moyen de modulation (74) module une sélection desdites paires.

15. Codeur selon l'une quelconque des revendications 11 à 14, **caractérisé en outre par** un moyen (79) pour retirer du signal codé l'un desdits lobes spectraux, et pour fournir l'autre desdits lobes spectraux en tant que ledit signal codé.

16. Codeur selon la revendication 11, **caractérisé en ce que** le moyen de combinaison comprend un moyen de multiplexage (60) pour multiplexer par répartition dans le temps les signaux de sous-bande interpolés, dans le but de former ledit signal codé.

17. Codeur selon la revendication 15, **caractérisé par** un moyen (60) pour multiplexer par répartition dans le temps les signaux de sous-bande, et le moyen d'interpolation soumet à un échantillonnage montant les signaux de sous-bande multiplexés et les interpole pour former les signaux de sous-bande interpolés.

18. Codeur selon la revendication 15, 16 ou 17, **caractérisé en ce que** le moyen d'interpolation assure l'échantillonnage montant à une cadence (P) qui dépend du nombre de sous-bandes (N) créées par le moyen de banc de filtres d'analyse.

19. Codeur selon la revendication 15, 16 ou 17, **caractérisé en ce que** le moyen (60) pour multiplexer par répartition dans le temps les signaux de sous-bande comprend un moyen de temporisation (DB₀, DB₁, ...) pour mémoriser une série de valeurs de chaque signal de sous-bande, le moyen de temporisation étant exploitable en alternance entre un premier état dans lequel le moyen de temporisation accepte des valeurs des signaux de sous-bande en parallèle et un deuxième état dans lequel le moyen de temporisation émet des valeurs précédemment mémorisées en série.

20. Codeur selon la revendication 15, 16 ou 17, **caractérisé en ce que** le moyen (60) pour multiplexer par répartition dans le temps les signaux de sous-bande comprend un premier moyen de temporisation (60A) et un deuxième moyen de temporisation (60B), chacun pouvant accepter une série de valeurs de chaque signal de sous-bande, chaque moyen de temporisation étant exploitable en alternance entre un premier état dans lequel le moyen de temporisation accepte des valeurs des signaux de sous-bande en parallèle et un deuxième état dans lequel le moyen de temporisation émet des valeurs précédemment mémorisées en série, l'arrangement étant tel que, quand le premier moyen de temporisation se trouve dans son premier état acceptant des valeurs des signaux de sous-bande, le deuxième moyen de temporisation se trouve dans son deuxième état et émet les valeurs du signal de sous-bande qui y ont été précédemment mémorisées.

21. Décodeur pour décoder des signaux numériques provenant d'un codeur selon la revendication 11, comprenant :
(i) un moyen (31) pour extraire de la même bande de fréquences ladite pluralité de signaux de sous-bande interpolés dans le signal codé reçu ; et
(ii) un banc de filtres de synthèse (33), complémentaire et essentiellement inverse du moyen de banc de filtres d'analyse utilisé pour coder le signal reçu, pour traitement de la paire extraite des signaux de sous-bande interpolés, dans le but de produire un signal décodé (I') correspondant au signal d'entrée (I).

22. Décodeur selon la revendication 21, pour décoder un signal codé, codé par le codeur de la revendication 12, et **caractérisé en outre par** un moyen de démodulation (81), pour assurer une démodulation orthogonale du signal reçu, dans le but d'extraire du signal reçu les signaux de sous-bande.

23. Décodeur selon la revendication 22, pour décoder un signal codé, codé par le codeur de la revendication 13, et **caractérisé en ce que** le moyen de démodulation (81) comprend un moyen pour la démodulation d'amplitude en quadrature du signal codé reçu par utilisation de signaux porteurs en phase et en quadrature ayant la même fréquence que ceux qui sont utilisés pour coder le signal codé.

24. Décodeur selon la revendication 22, pour décoder un signal codé, codé par le codeur de la revendication 14, et **caractérisé en ce que** le banc de filtres de synthèse (33) est arrangé de façon à compenser les signaux de sous-bande non-utilisés en les remplaçant par des signaux au niveau zéro.

25. Décodeur selon la revendication 21, **caractérisé en ce que** le moyen d'extraction comprend un moyen de démultiplexage (71) pour démultiplexer par répartition dans le temps le signal ayant subi un échantillonnage descendant, dans le but de fournir une pluralité de signaux interpolés reçus, correspondant auxdits signaux interpolés dans le codeur.

26. Décodeur selon la revendication 25, **caractérisé en ce qu'**un décimateur (70) soumet à un échantillonnage descendant le signal reçu, et le décodeur comprend en outre un moyen de démultiplexage (71) pour démultiplexer par répartition dans le temps le signal reçu ayant subi un échantillonnage descendant, dans le but d'extraire les signaux de sous-bande.

27. Décodeur selon la revendication 25 ou 26, **caractérisé en ce qu'**un moyen d'entrée de décodeur assure l'échantillonnage descendant à une cadence (P) correspondant à la cadence d'échantillonnage montant (P) utilisée par le codeur pour soumettre les signaux de sous-bande à un échantillonnage montant.

28. Décodeur selon la revendication 25, 26 ou 27, **caractérisé en ce que** le moyen (71) pour démultiplexer le signal reçu dans le but d'extraire les signaux de sous-bande comprend un moyen de temporisation (DB₀, DB₁, ...) pour mémoriser une série de valeurs dudit signal reçu, le moyen de temporisation étant exploitable en alternance entre un premier état dans lequel le moyen de temporisation accepte des valeurs du signal reçu en série et un deuxième état dans lequel le moyen de temporisation émet des valeurs précédemment mémorisées en parallèle, en tant que lesdits signaux de sous-bande.

29. Décodeur selon la revendication 25, 26 ou 27, **caractérisé en ce que** le moyen (71) pour démultiplexer par répartition dans le temps les signaux de sous-bande comprend un premier moyen de temporisation (DB'₀) et un deuxième moyen de temporisation (DB'₁), chacun pouvant accepter une série de valeurs du signal reçu, chaque moyen de temporisation étant exploitable en alternance entre un premier état dans lequel le moyen de temporisation accepte des valeurs du signal reçu en série et un deuxième état dans lequel le moyen de temporisation émet des valeurs précédemment mémorisées en parallèle, l'arrangement étant tel que, quand le premier moyen de temporisation se trouve dans son premier état acceptant des valeurs du signal reçu, le deuxième moyen de temporisation se trouve dans son deuxième état et émet des valeurs du signal de sous-bande qui y ont été précédemment mémorisées.

30. Procédé de codage d'un signal d'entrée numérique pour transmission ou mémorisation, et décodage dudit signal codé pour reconstituer le signal d'entrée, le codage comprenant les étapes de :
(i) utilisation d'un moyen de banc de filtres d'analyse (21) pour analyser le signal d'entrée (I) et le décomposer en une pluralité de signaux de sous-bande (S₀, ... S_{N-1}), chaque sous-bande étant centrée sur une fréquence d'une pluralité correspondante de fréquences ;
(ii) échantillonnage montant et interpolation de chaque signal de sous-bande, pour fournir une pluralité de signaux de sous-bande interpolés, dont chacun occupe la même bande de fréquences que les autres ; et
(iii) combinaison des signaux de sous-bande interpolés pour former le signal codé (E₀) pour transmission ou mémorisation ;
le décodage comprend les étapes de :
(iv) extraction des signaux de sous-bande interpolés du signal codé reçu ;
(v) décimation de chacun de la pluralité de signaux de sous-bande interpolés extraits pour retirer un nombre d'échantillons équivalent aux valeurs interpolées ; et
(vi) utilisation d'un moyen de banc de filtres de synthèse (33) complémentaire dudit moyen de banc de filtres d'analyse (21), traitement de la pluralité de signaux de sous-bande décimés pour reconstituer ledit signal d'entrée, **caractérisé en ce que**, pendant le codage, la pluralité de signaux de sous-bande interpolés sont combinés à l'intérieur du signal codé de façon que lesdits signaux de sous-bande interpolés occupent-la même bande de fréquences.

31. Procédé selon la revendication 30, **caractérisé en ce que** l'étape de combinaison utilise une paire de signaux interpolés, l'un d'eux fournissant un premier signal modulé et l'autre un deuxième signal modulé, le premier signal modulé et le deuxième signal modulé ayant la même fréquence mais étant déphasés de 90 degrés l'un par rapport à l'autre, et combine les signaux modulés de façon à fournir ledit signal codé (E₀), ledit signal codé ayant deux lobes spectraux, chacun comprenant des informations provenant des deux signaux interpolés, et le décodeur extrait du signal codé reçu les signaux modulés, et démodule les signaux modulés extraits dans le but de produire les signaux interpolés reçus.

32. Procédé selon la revendication 31, **caractérisé en ce que** la modulation comprend une modulation d'amplitude en quadrature (QAM) par utilisation de chacun des signaux de sous-bande interpolés, dont l'un module un signal porteur en phase (f₁) et l'autre un signal porteur en quadrature (f_{Q}), le signal porteur en phase et le signal porteur en quadrature ayant la même fréquence mais étant déphasés de 90 degrés l'un par rapport à l'autre, et l'étape de démodulation au niveau du décodeur comprend l'étape de démodulation d'amplitude en quadrature du signal codé reçu par utilisation de signaux porteurs en phase et en quadrature ayant la même fréquence que ceux qui sont utilisés pour coder le signal codé.

33. Procédé selon la revendication 30, **caractérisé en ce qu'**une pluralité de paires de signaux de sous-bande (S₀,S₁,S₂,S₃) sont générés, mais seulement une sélection (S₀,S₁) desdites paires est modulée, et le traitement par le moyen de filtres de synthèse compense les signaux de sous-bande non-utilisés, en les remplaçant par des signaux au niveau zéro.

34. Procédé selon la revendication 31 ou 32, **caractérisé en outre par** l'étape consistant à retirer du signal codé l'un.desdits lobes spectraux.

35. Procédé selon la revendication 30, **caractérisé en ce que** les signaux interpolés sont combinés par utilisation d'un multiplexage par répartition dans le temps, et l'étape d'extraction répartition dans le temps démultiplexe le signal reçu, pour extraire les signaux interpolés reçus.

36. Procédé selon la revendication 35, **caractérisé en ce que** l'étape d'échantillonnage montant pendant le codage est appliquée aux signaux interpolés multiplexés, et l'étape d'échantillonnage descendant pendant le décodage est appliquée au signal reçu avant démultiplexage.

37. Procédé selon la revendication 35 ou 36, **caractérisé en ce que** l'échantillonnage montant pendant le codage s'effectue à une cadence correspondant au nombre de sous-bandes créées par le moyen de banc de filtres d'analyse.

38. Procédé selon la revendication 35, 36 ou 37, **caractérisé en ce que** le multiplexage par répartition dans le temps des signaux interpolés comprend les étapes alternées de mémorisation d'une série de valeurs de chaque signal de sous-bande, en parallèle, dans un moyen de temporisation (DB₀, DB₁, ...) et l'émission, en série, et à partir des moyens de temporisation, de valeurs qui y ont été précédemment mémorisées, et le démultiplexage du signal reçu, pour extraire les signaux de sous-bande, comprend les étapes alternées de mémorisation d'une série de valeurs dudit signal reçu en série dans le moyen de temporisation (DB'₀,DB'₁, ...) et d'émission de valeurs précédemment mémorisées, en parallèle, en tant que lesdits signaux de sous-bande.

39. Procédé selon la revendication 35, 36 ou 37, **caractérisé en ce que** l'étape de multiplexage des signaux de sous-bande utilise le premier moyen de temporisation (60a) et le deuxième moyen de temporisation (60b), chacun destiné à accepter une série de valeurs de chaque signal de sous-bande, chaque moyen de temporisation étant chargé en alternance de valeurs des signaux de sous-bande en parallèle, les valeurs précédemment mémorisées étant émises en série, l'arrangement étant tel que, pendant l'étape de charge de chacun des moyens de temporisation par des valeurs des signaux de sous-bande, l'autre moyen de temporisation émet les valeurs du signal de sous-bande qui y ont été précédemment mémorisées, et l'étape de démultiplexage par répartition dans le temps des signaux de sous-bande utilise un premier moyen de temporisation (71A) et un deuxième moyen de temporisation (71B), chacun acceptant une série de valeurs du signal reçu, chaque moyen de temporisation étant en alternance chargé de valeurs du signal reçu en série et émettant en parallèle des valeurs précédemment mémorisées, l'arrangement étant tel que, quand chacun des moyens de temporisation est chargé des valeurs du signal reçu, l'autre moyen de temporisation émet les valeurs du signal de sous-bande qui y ont été précédemment mémorisées.

40. Procédé de codage d'un signal d'entrée numérique pour transmission et mémorisation, comprenant les étapes de :
(i) utilisation d'un moyen de banc de filtres d'analyse (21), qui analyse le signal d'entrée et le décompose en une pluralité de signaux de sous-bande, chaque sous-bande étant centrée au niveau d'une fréquence d'une pluralité correspondante de fréquences ;
(ii) échantillonnage montant et interpolation de chaque signal de sous-bande, pour fournir une pluralité de signaux interpolés, chacun occupant la même bande de fréquences que les autres ; et
(iii)combinaison des signaux de sous-bande interpolés pour former le signal codé pour transmission ou mémorisation, **caractérisé en ce que** la pluralité de signaux de sous-bande sont combinés à l'intérieur du signal codé de façon que lesdits signaux de sous-bande interpolés occupent la même bande de fréquences.

41. Procédé de codage selon la revendication 40, **caractérisé en ce que** l'étape de combinaison utilise ladite paire de signaux de sous-bande interpolés, dont chacun fournit un premier signal modulé et l'autre un deuxième signal modulé, le premier signal modulé et le deuxième signal modulé ayant la même fréquence mais étant déphasés de 90 degrés l'un par rapport à l'autre, et combine les signaux modulés de façon à fournir ledit signal codé, de telle sorte que le signal codé possède deux lobes spectraux, chacun comprenant des informations provenant des deux signaux de sous-bande interpolés.

42. Procédé de codage selon la revendication 41, **caractérisé en ce que** l'étape de combinaison utilise les signaux de sous-bande interpolés, l'un pour la modulation d'amplitude en quadrature d'un signal porteur en phase (fᵢ) et l'autre pour la modulation d'amplitude en quadrature pour un signal porteur en quadrature (f_{Q}), le signal porteur en phase et le signal porteur en quadrature ayant la même fréquence mais étant déphasés de 90 degrés l'un par rapport à l'autre.

43. Procédé de codage selon la revendication 40, **caractérisé en ce qu'**une pluralité de paires de signaux de sous-bande (S₀,S₁,S₂,S₃) est générée par utilisation d'un moyen de filtre d'analyse, mais seulement une sélection (S₀,S₁) desdites paires est modulée.

44. Procédé de codage selon la revendication 41, 42 ou 43, **caractérisé en outre par** l'étape consistant à retirer du signal codé l'un desdits lobes spectraux.

45. Procédé de codage selon la revendication 40, **caractérisé en ce que** les signaux de sous-bande interpolés sont combinés par utilisation d'un multiplexage par répartition dans le temps.

46. Procédé de codage selon la revendication 45, **caractérisé en ce que** l'échantillonnage montant est réalisé après l'étape de multiplexage des signaux de sous-bande.

47. Procédé de codage selon la revendication 45 ou 46, **caractérisé en ce que** l'échantillonnage montant s'effectue à une cadence (P) correspondant au nombre de sous-bandes (N) fournies par le moyen de banc de filtres d'analyse.

48. Procédé de codage selon la revendication 45, 46 ou 47, **caractérisé en ce que** le multiplexage des signaux de sous-bande utilise un moyen de temporisation (DB₀, DB₁, ...) pour mémoriser une série de valeurs de chaque signal de sous-bande, les valeurs étant mémorisées dans le moyen de temporisation en parallèle, et, en alternance, les valeurs précédemment mémorisées étant émises du moyen de temporisation en série.

49. Procédé de codage selon la revendication 45, 46 ou 47, **caractérisé en ce que** l'étape de multiplexage des signaux de sous-bande utilise un premier moyen de temporisation (60A) et un deuxième moyen de temporisation (60B), chacun acceptant une série de valeurs de chaque signal de sous-bande, chaque moyen de temporisation étant chargé de valeurs des signaux de sous-bande en parallèle, et en alternance émettant des valeurs précédemment mémorisées en série, l'arrangement étant tel que, pendant le chargement de chacun des moyens de temporisation par des valeurs des signaux de sous-bande, l'autre moyen de temporisation émet les valeurs des signaux de sous-bande qui y ont été précédemment mémorisées.

50. Procédé de décodage d'un signal codé, codé par le procédé de codage selon la revendication 40, comprenant les étapes de :
(iii)extraction, de la même bande de fréquences et d'un signal codé reçu (E'₀), de ladite paire de signaux interpolés ; et
(iv) utilisation d'un moyen de banc de filtres de synthèse (33) complémentaire et essentiellement inverse du moyen de banc de filtres d'analyse utilisé pendant le codage, pour traiter la paire extraite de signaux interpolés reçus, dans le but de produire un signal décodé (I') correspondant au signal d'entrée (I).

51. Procédé de décodage selon la revendication 50, pour décoder un signal codé, codé par le procédé de codage de la revendication 41, et **caractérisé en outre par** l'étape de démodulation orthogonale du signal reçu, pour extraire les signaux interpolés.

52. Procédé de décodage selon la revendication 51, pour décoder un signal codé, codé par le procédé de codage de la revendication 42, **caractérisé en ce que** la démodulation du signal codé reçu comprend une démodulation d'amplitude en quadrature utilisant des signaux porteurs en phase et en quadrature ayant la même fréquence que ceux qui sont utilisés pour coder le signal codé.

53. Procédé de décodage selon la revendication 50, pour décoder un signal codé, codé par le codeur de la revendication 43, et **caractérisé en ce que** le traitement utilisant le moyen de banc de filtres de synthèse est arrangé de façon à compenser les signaux de sous-bande non-utilisés en les remplaçant par des signaux au niveau zéro.

54. Procédé selon la revendication 50, **caractérisé en ce que** les signaux interpolés sont combinés par utilisation d'un multiplexage par répartition dans le temps.

55. Procédé de décodage selon la revendication 54, **caractérisé en ce que** le signal codé reçu est soumis à un échantillonnage descendant avant le démultiplexage.

56. Procédé de décodage selon la revendication 54 ou 55, **caractérisé en ce que** l'échantillonnage descendant s'effectue à une. cadence (P) correspondant à la cadence d'échantillonnage montant (P) utilisée pendant le codage.

57. Procédé de décodage selon la revendication 54, 55 ou 56, **caractérisé en ce que** l'étape de démultiplexage du signal reçu, dans le but d'extraire les signaux interpolés, comprend les étapes alternées de mémorisation d'une série de valeurs dudit signal reçu en série dans un moyen de temporisation (DB'₀, DB'₁,...) et d'émission de valeurs précédemment mémorisées en parallèle, en tant que lesdits signaux interpolés.

58. Procédé de décodage selon la revendication 54, 55 ou 56, **caractérisé en ce que** l'étape de démultiplexage des signaux interpolés utilise un premier moyen de temporisation (71A) et un deuxième moyen de temporisation (71B), chacun pour accepter une série de valeurs du signal reçu, chaque moyen de temporisation ayant des valeurs du signal reçu, qui y sont chargées en série, et en alternance émettant des valeurs précédemment mémorisées en parallèle, l'arrangement étant tel que, quand les valeurs du signal reçu sont chargées dans l'un des moyens de temporisation, il y a émission des valeurs du signal interpolé précédemment mémorisées dans l'autre moyen de temporisation.
